# EUROPEAN PATENT SPECIFICATION

(11) **EP 4 428 204 B1**
(45) Date of publication and mention of the grant of the patent: **19.11.2025**
(21) Application number: 24161798.4
(22) Date of filing: 06.03.2024
(51) Int. Cl.: C09D 5/00

(54) **RESIN COMPOSITION FOR ULTRAVIOLET CURING HARD COATING CONTAINING ELECTRICALLY CONDUCTIVE POLYMER AND PRODUCTION METHOD THEREFORE**
HARZZUSAMMENSETZUNG FÜR UV-HÄRTBARE HARTBESCHICHTUNG MIT ELEKTRISCH LEITFÄHIGEM POLYMER UND HERSTELLUNGSVERFAHREN DAFÜR
COMPOSITION DE RÉSINE POUR LE DURCISSEMENT AUX ULTRAVIOLETS D'UN REVÊTEMENT DUR CONTENANT UN POLYMÈRE ÉLECTROCONDUCTEUR ET SON PROCÉDÉ DE PRODUCTION

(30) Priority: 07.03.2023 JP 2023035008
(43) Date of publication of application: 11.09.2024
(73) Proprietor: Tosoh Corporation, Yamaguchi 746-8501 (JP)
(72) Inventor: AOKI, Haruka, Yamaguchi, 7468501 (JP); HAYASHI, Sadayoshi, Yamaguchi, 7468501 (JP); YANO, Hirokazu, Yamaguchi, 7468501 (JP); MIYAKE, Hirofumi, Yamaguchi, 7468501 (JP)
(74) Representative: Novagraaf International SA

(56) References cited:
- WO-A1-2014/168475
- JP-A- 2004 091 618
- JP-A- 2009 196 202
- US-A1- 2007 202 297

## Description

### Technical Field

The present invention relates to a resin composition for an ultraviolet curing hard coating, the resin composition containing an electrically conductive polymer.

### Background Art

Plastic is easier to mold than metals or glass, but there is a problem that a surface of plastic is easily scratched. This problem can be solved by applying a hard coating that protects the plastic surface. Applications of hard coatings are roughly classified into an electronics field and a non-electronics field. In recent years, due to advance in Internet of Things (IoT) and development of various devices and apparatuses, there is a high demand for hard coatings in the electronics field. Specific products to which hard coatings are applied include various types of displays, and the like.

Among the hard coatings, an ultraviolet curing hard coating using an ultraviolet curable resin can be applied at a lower temperature and in a shorter time than conventional coating agents. This feature enhances productivity and efficiency, and thus the ultraviolet curing hard coating has been developed for various applications.

Basic characteristics of the hard coating are hardness and scratch resistance. In addition to these characteristics, hard coatings used in various types of displays for optical applications need to have an antistatic function in order to prevent electrostatic adhesion of dust. As an index of the antistatic ability, a surface resistance value of a hard coating is used. A lower surface resistance value of a hard coating indicates a better antistatic ability. In general, an antistatic ability of an antistatic hard coating is imparted by addition of an electrically conductive substance, and the hardness and scratch resistance, which are the basic characteristics, are imparted by a resin which is a main component.

Conventionally, a resin composition for an antistatic hard coating containing an ionic compound, an electrically conductive polymer, or an ionic liquid as an electrically conductive substance, and an antistatic hard coating using such a resin composition have been developed (see Patent Literatures 1 through 3). Patent Literature 4 discloses a hard coat film comprising a hard coat layer having a pencil hardness of 2H or more provided on at least one side of a biaxially oriented thermoplastic film. Patent Literature 5 discloses a solvent based nail polish composition. Patent Literature 6 discloses a hard coat film, and an antireflection film, a polarizing plate, and a display device each using the hard coat film. Patent Literature 7 discloses a laminated film having a laminated layer formed by coating.

### Citation List

### [Patent Literature]

[PTL 1] Japanese Patent Application Publication Tokukai No. 2012-184349
[PTL 2] Japanese Patent Application Publication Tokukai No. 2013-105178
[PTL 3] Japanese Patent Application Publication Tokukai No. 2016-216635
[PTL 4] Japanese Patent Publication No. 2004-091618
[PTL 5] WO Publication No. 2014/168475
[PTL 6] Japanese Patent Publication No. 2009-196202
[PTL 7] U.S. Patent Publication No. 2007/202297

### Summary of Invention

### Technical Problem

The resin composition for an antistatic hard coating to which an ionic liquid or the like is added and the antistatic hard coating using the resin composition, which are disclosed as the background art, have room for further improvement from the viewpoint of achieving both an antistatic ability and high hardness.

### Solution to Problem

As a result of diligent studies for solving the above problems, the inventors of the present invention have found that an invention indicated below solves the above problems, and have accomplished the present invention.

The invention is as set out in the independent claims, further aspects of the invention are outlined in the dependent claims. Embodiments that do not fall within the scope of the claims do not describe part of the invention.

A resin composition for an ultraviolet curing hard coating in accordance with an aspect of the present invention contains: an electrically conductive polymer that contains polythiophene (A) including at least two structural units each of which is at least one selected from the group consisting of a structural unit represented by a general formula (1) below and a structural unit represented by a general formula (2) below; an ultraviolet curable resin (B); and a solvent (C), 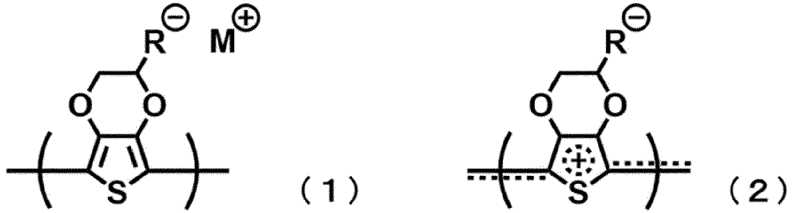 where, in the general formula (1), M⁺ represents a hydrogen ion, an alkali metal ion, a conjugate acid of an amine compound, or a quaternary ammonium cation, and in the general formulae (1) and (2), R represents an organic group that has 1 to 14 carbon atoms in total and has at least one substituent selected from the group consisting of a sulfonic acid group and a phosphonic acid group.

A hard coating in accordance with an aspect of the present invention contains: polythiophene (A) including at least two structural units each of which is at least one selected from the group consisting of a structural unit represented by a general formula (1) below and a structural unit represented by a general formula (2) below, 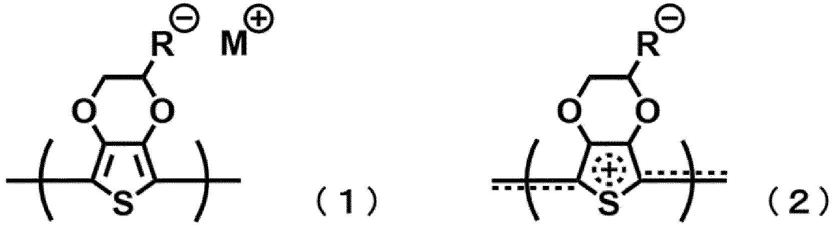 where, in the general formula (1), M⁺ represents a hydrogen ion, an alkali metal ion, a conjugate acid of an amine compound, or a quaternary ammonium cation, and in the general formulae (1) and (2), R represents an organic group that has 1 to 14 carbon atoms in total and has at least one substituent selected from the group consisting of a sulfonic acid group and a phosphonic acid group.

### Advantageous Effects of Invention

According to an aspect of the present invention, the resin composition for an ultraviolet curing hard coating describe above can provide an excellent hard coating that has an excellent antistatic ability and also high hardness, unlike conventional techniques.

### Description of Embodiments

The following description will discuss details of an embodiment of the present invention. Note that a numerical range "A to B" herein means "not less (lower) than A and not more (higher) than B" unless otherwise stated.

Various hard coatings have been developed as antistatic applications. It is generally difficult to realize a hard coating that satisfies all demanded characteristics, because such characteristics demanded of a hard coating can be in a trade-off relation to each other.

For example, in a hard coating using an ionic liquid as an electrically conductive substance, it is necessary to increase a contained amount of the ionic liquid in order to obtain a sufficient antistatic ability. Meanwhile, hardness of the hard coating decreases in accordance with the increase in the contained amount of the ionic liquid. Therefore, the hardness of the hard coating using an ionic liquid is sacrificed by the impartment of the antistatic ability.

The resin composition for an ultraviolet curing hard coating in accordance with an aspect of the present invention can provide a hard coating that exhibits high hardness that cannot be achieved by conventional techniques, while having a sufficient antistatic ability, and the resin composition brings about a remarkable effect of being able to achieve both an antistatic function and scratch prevention at high levels. Details of these features will be described later with reference to specific examples. Hereinafter, the "resin composition for an ultraviolet curing hard coating" is also simply referred to as a "resin composition".

The hard coating using an ionic liquid as an electrically conductive substance also has a problem that the antistatic ability is heavily depends on humidity, and a sufficient antistatic ability is not exerted when the humidity decreases.

In contrast, the resin composition in accordance with an aspect of the present invention has been found to have a feature in which the antistatic ability less depends on humidity, and brings about an effect of being able to provide a hard coating that exhibits a stable antistatic ability without being affected by a humidity change.

Further, the resin composition in accordance with an aspect of the present invention brings about an effect of also having high water repellency and an antifouling property.

That is, the resin composition in accordance with an aspect of the present invention brings about a remarkable effect of concurrently achieving a plurality of functions such as a sufficiently antistatic ability, high hardness, less dependency on humidity, an antifouling property, and water repellency.

A resin composition in accordance with an aspect of the present invention contains: an electrically conductive polymer that contains polythiophene (A1) including at least two structural units each of which is at least one selected from the group consisting of a structural unit represented by a general formula (1) below and a structural unit represented by a general formula (2) below; an ultraviolet curable resin (B); and a solvent (C), 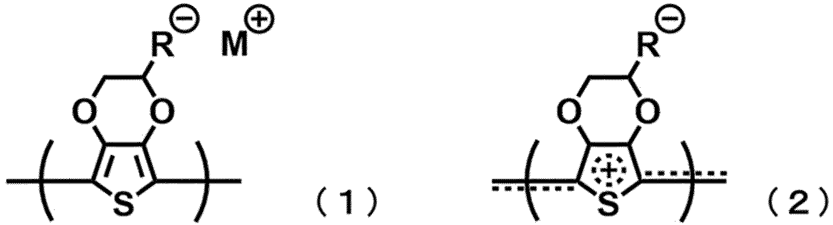 where, in the general formula (1), M⁺ represents a hydrogen ion, an alkali metal ion, a conjugate acid of an amine compound, or a quaternary ammonium cation, and in the general formulae (1) and (2), R represents an organic group that has 1 to 14 carbon atoms in total and has at least one substituent selected from the group consisting of a sulfonic acid group and a phosphonic acid group.

In the general formulae (1) and (2), R⁻ represents a state in which a sulfonic acid group or a phosphonic acid group contained in R is ionized. In the general formula (1), a state is represented in which a cation represented by M⁺ is ion-bonded to R⁻ as a counter cation of R-.

In the general formula (1), M⁺ represents a hydrogen ion, an alkali metal ion, a conjugate acid of an amine compound, or a quaternary ammonium cation.

Preferable examples of the alkali metal ion include an Li ion, an Na ion, and a K ion.

The conjugate acid of an amine compound indicates a conjugate acid in which a hydron (H⁺) has been added to the amine compound and the amine compound has become a cationic species. The amine compound only needs to be an amine compound that reacts with a sulfonic acid group or a phosphonic acid group to form a conjugate acid. Examples of such an amine compound include: an amine compound represented by N(R¹)₃ having an sp3 hybrid orbital (where a conjugate acid is represented by [NH(R^{L}₃]⁺); a pyridine compound having an sp2 hybrid orbital; and an imidazole compound.

The substituents R¹ each independently represent a hydrogen atom, an alkyl group having 1 to 18 carbon atoms, or an alkyl group that has a substituent and has 1 to 18 carbon atoms in total.

Examples of the alkyl group having 1 to 18 carbon atoms include, but not particularly limited to, a methyl group, an ethyl group, an n-propyl group, an isopropyl group, an n-butyl group, an isobutyl group, a sec-butyl group, a tert-butyl group, an n-pentyl group, an isopentyl group, a neopentyl group, a tert-pentyl group, a cyclopentyl group, an n-hexyl group, a 2-ethylbutyl group, a cyclohexyl group, an octyl group, a 2-ethylhexyl group, a nonyl group, a decyl group, a dodecyl group, a tetradecyl group, a hexadecyl group, an octadecyl group, and the like.

Examples of the alkyl group that has a substituent and has 1 to 18 carbon atoms in total include alkyl groups each having 1 to 18 carbon atoms and having a halogen atom, an alkyl group having 1 to 18 carbon atoms, an amino group, or a hydroxy group. The alkyl group that has a substituent and has 1 to 18 carbon atoms is specifically a trifluoromethyl group, a 2-hydroxyethyl group, or the like.

Among these, the substituents R¹ are each independently preferably a hydrogen atom, a methyl group, an ethyl group, a propyl group, an isopropyl group, a butyl group, a hexyl group, an octyl group, a 2-ethylhexyl group, or a 2-hydroxyethyl group.

Examples of the amine compound that forms a conjugate acid of an amine compound and is represented by N(R¹)₃ include ammonia, methylamine, dimethylamine, trimethylamine, ethylamine, diethylamine, triethylamine, normal-propylamine, isopropylamine, normal-butylamine, tertiary butylamine, dibutylamine, tributylamine, hexylamine, dihexylamine, trihexylamine, octylamine, dioctylamine, trioctylamine, ethanolamine compounds (e.g., aminoethanol, dimethylaminoethanol, methylaminoethanol, diethanolamine, N-methyldiethanolamine, triethanolamine), 3-amino-1,2-propanediol, 3-methylamino-1,2-propanediol, 3-dimethylamino-1,2-propanediol, N-isopropyl-N,N-dimethylamine, N-ethyl-N,N-dimethylamine, and the like.

Examples of a compound other than the amine compound represented by N(R¹)₃ include imidazole compounds (e.g., imidazole, N-methylimidazole, 1,2-dimethylimidazole), pyridine, picoline, lutidine, and the like.

A total number of carbons of the conjugate acid of an amine compound is not particularly limited and may be 1 to 30. From the viewpoint of solubility, the total number of carbons is preferably 4 to 30, more preferably 5 to 30, further preferably 5 to 25, particularly preferably 12 to 24, most preferably 18 to 24.

Examples of the quaternary ammonium cation include a tetramethylammonium cation, a tetraethylammonium cation, a tetranormalpropylammonium cation, a tetranormalbutylammonium cation, a tetranormalhexylammonium cation, and the like. From the viewpoint of availability, the quaternary ammonium cation is preferably a tetramethylammonium cation or a tetraethylammonium cation.

The total number of carbons of the quaternary ammonium cation is not particularly limited and may be, for example, 4 to 30, and is preferably 5 to 30, more preferably 8 to 16.

In the general formulae (1) and (2), R represents an organic group that has 1 to 14 carbon atoms in total and has at least one substituent selected from the group consisting of a sulfonic acid group and a phosphonic acid group.

The organic group having 1 to 14 carbon atoms in total can also be referred to as a hydrocarbon group that may have a substituent and that has 1 to 14 carbon atoms in total. Examples of the organic group having 1 to 14 carbon atoms in total include, but not particularly limited to, a methyl group, an ethyl group, a propyl group, a butyl group, a hexyl group, an octyl group, a decyl group, a dodecyl group, a tetradecyl group, a propyloxymethyl group, a butyloxymethyl group, and the like.

The polythiophene (A) is not particularly limited. From the view point of excellent electrical conductivity, the polythiophene (A) is preferably polythiophene (A1) including at least two structural units each of which is at least one selected from the group consisting of a structural unit represented by a general formula (3) below and a structural unit represented by a general formula (4) below, or polythiophene (A2) including at least two structural units each of which is at least one selected from the group consisting of a structural unit represented by a general formula (5) below and a structural unit represented by a general formula (6) below. The polythiophene (A2) is more preferably polythiophene (A2') including at least two structural units each of which is at least one selected from the group consisting of a structural unit represented by a general formula (5') below and a structural unit represented by a general formula (6') below.

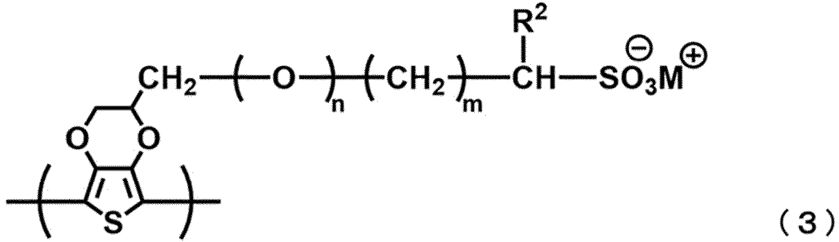

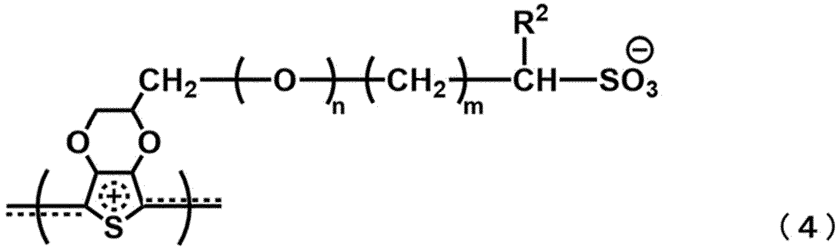

In the general formula (3), M⁺ represents a hydrogen ion, an alkali metal ion, a conjugate acid of an amine compound, or a quaternary ammonium cation. In the general formulae (3) and (4), R² represents a hydrogen atom, a linear or branched alkyl group having 1 to 6 carbon atoms, or a halogen atom, m represents an integer of 1 to 6, and n represents 0 or 1.

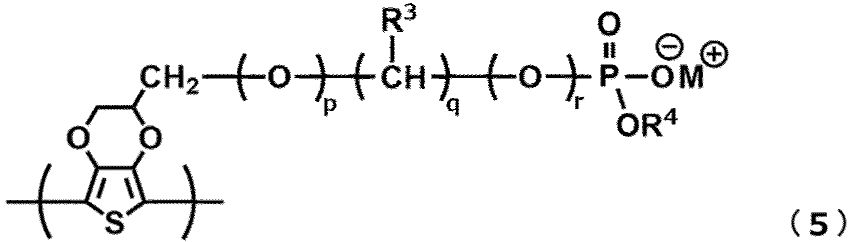

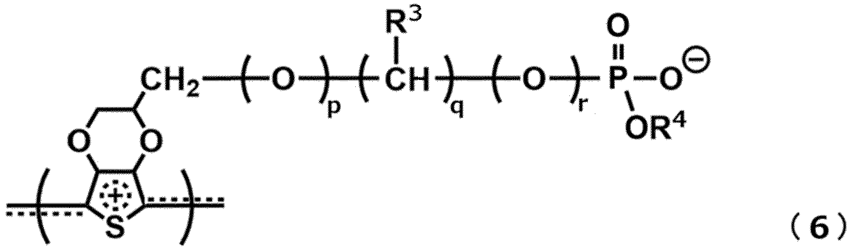

In the general formula (5), M⁺ represents a hydrogen ion, an alkali metal ion, a conjugate acid of an amine compound, or a quaternary ammonium cation. In the general formulae (5) and (6), R³ represents, independently for each appearance, a hydrogen atom, a linear or branched alkyl group having 1 to 6 carbon atoms, or a halogen atom. R⁴ represents a hydrogen atom, or a linear or branched alkyl group having 1 to 6 carbon atoms. p represents 0 or 1, q represents an integer of 0 to 6, and r represents 0 or 1.

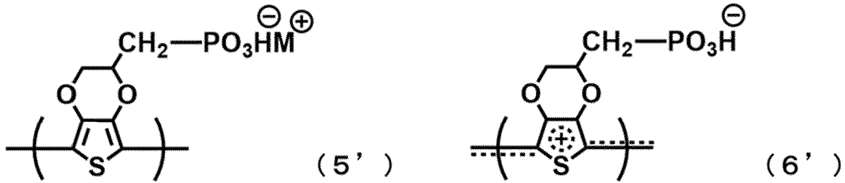

In the general formula (5'), M⁺ represents a hydrogen ion, an alkali metal ion, a conjugate acid of an amine compound, or a quaternary ammonium cation.

A definition and a preferable range of M⁺ in the general formulae (3), (5), and (5') are identical with the definition and the preferable range of M⁺ in the general formula (1).

R² in the general formulae (3) and (4) and R³ in the general formulae (5) and (6) each represent a hydrogen atom, a linear or branched alkyl group having 1 to 6 carbon atoms, or a halogen atom.

Examples of the linear or branched alkyl group having 1 to 6 carbon atoms include a methyl group, an ethyl group, an n-propyl group, an isopropyl group, an n-butyl group, an isobutyl group, a sec-butyl group, a tert-butyl group, an n-pentyl group, an isopentyl group, a neopentyl group, a tert-pentyl group, a cyclopentyl group, an n-hexyl group, a 2-ethylbutyl group, a cyclohexyl group, and the like.

Examples of the halogen atom include a fluorine atom, a chlorine atom, a bromine atom, and the like.

From the viewpoint of film formation property, R² and R³ are each preferably a hydrogen atom, a methyl group, an ethyl group, or a fluorine atom. From the viewpoint of film formation property, R² is more preferably a hydrogen atom or a methyl group, and more preferably a methyl group. From the viewpoint of film formation property, R³ is more preferably a hydrogen atom or a methyl group, more preferably a hydrogen atom.

In the general formulae (5) and (6), R⁴ represents a hydrogen atom, or a linear or branched alkyl group having 1 to 6 carbon atoms.

Examples of the linear or branched alkyl group having 1 to 6 carbon atoms include a methyl group, an ethyl group, an n-propyl group, an isopropyl group, an n-butyl group, an isobutyl group, a sec-butyl group, a tert-butyl group, an n-pentyl group, an isopentyl group, a neopentyl group, a tert-pentyl group, a cyclopentyl group, an n-hexyl group, a 2-ethylbutyl group, a cyclohexyl group, and the like.

From the viewpoint of film formation property, R⁴ is preferably a hydrogen atom, a methyl group, or an ethyl group, more preferably a hydrogen atom.

In the formulae (3) and (4), m represents an integer of 1 to 6, and m is preferably an integer of 1 to 4, more preferably 2 or 3.

In the formulae (3) and (4), n is 0 or 1, and preferably 1. In the formulae (5) and (6), p represents 0 or 1, and is preferably 0. In the formulae (5) and (6), q represents an integer of 0 to 6, and is preferably 0. In the formulae (5) and (6), r represents 0 or 1, and is preferably 0.

The structural units represented by the general formulae (2), (4), (6), and (6') above represent self-doped states of the structural units represented by the general formulae (1), (3), (5), and (5'), respectively. The doped states are expressed when a sulfonic acid group or a phosphonic acid group in each of the structural units represented by the general formulae (1), (3), (5), and (5') acts as a p-type dopant. A polymer that expresses an electrically conductive property without external addition of a dopant is referred to as a self-doped polymer.

The polythiophene (A) in the present embodiment can be produced by polymerizing a thiophene monomer represented by a general formula (7) below in water or an alcohol solvent in the presence of an oxidant, and then carrying out an acid treatment as necessary.

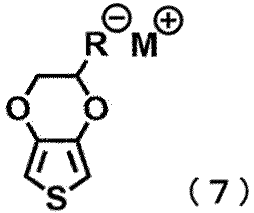

M⁺ in the general formula (7) represents a hydrogen ion or a metal ion.

The polythiophene (A1) in the present embodiment can be produced by polymerizing a thiophene monomer represented by a general formula (8) below in water or an alcohol solvent in the presence of an oxidant, and then carrying out an acid treatment as necessary.

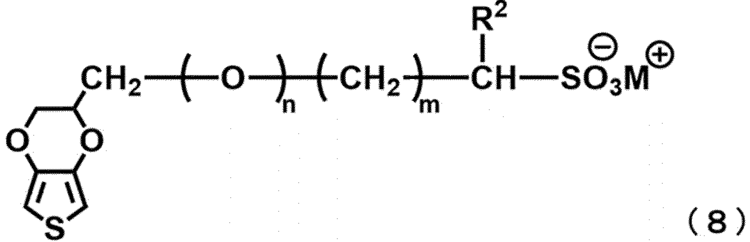

In the general formula (8), M⁺ represents a hydrogen ion or a metal ion. R² is synonymous with R² in the general formula (1) described above. m represents an integer of 1 to 6, and n represents 0 or 1.

The polythiophene (A2) in the present embodiment can be produced by polymerizing a thiophene monomer represented by a general formula (9) below in water or an alcohol solvent in the presence of an oxidant, and then carrying out an acid treatment as necessary.

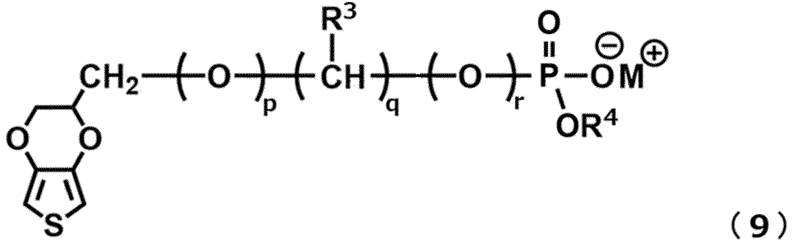

In the general formula (9), M⁺ represents a hydrogen ion or a metal ion. R³ represents, independently for each appearance, a hydrogen atom, a linear or branched alkyl group having 1 to 6 carbon atoms, or a halogen atom. R⁴ represents a hydrogen atom, or a linear or branched alkyl group having 1 to 6 carbon atoms. p represents 0 or 1, q represents an integer of 0 to 6, and r represents 0 or 1.

The polythiophene (A2') in the present embodiment can be produced by polymerizing a thiophene monomer represented by a general formula (9') below in water or an alcohol solvent in the presence of an oxidant, and then carrying out an acid treatment as necessary.

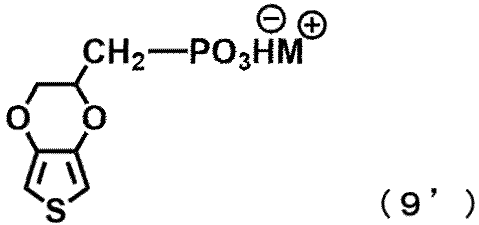

In the general formula (9'), M⁺ represents a hydrogen ion or a metal ion.

The metal ion represented by M⁺ in the general formulae (7), (8), (9), and (9') are not particularly limited. Examples of the metal ion include a transition metal ion, a noble metal ion, a nonferrous metal ion, an alkali metal ion (e.g., an Li ion, an Na ion, a K ion), and an alkaline-earth metal ion.

In a case where a polymer obtained after polymerization of the thiophene monomer represented by the general formulae (7), (8), (9), and (9') is a salt of a metal ion, it is possible to convert M⁺ into a hydrogen ion by subjecting the resulting metal salt polymer to an acid treatment.

The thiophene monomer represented by the general formula (8) is not particularly limited, and specific examples thereof include 6-(2,3-dihydro-thieno[3,4-b][1,4]dioxin-2-yl)hexane-1-sulfonic acid, sodium 6-(2,3-dihydro-thieno[3,4-b][1,4]dioxin-2-yl)hexane-1-sulfonate, lithium 6-(2,3-dihydro-thieno[3,4-b][1,4]dioxin-2-yl)hexane-1-sulfonate, potassium 6-(2,3-dihydro-thieno[3,4-b][1,4]dioxin-2-yl)hexane-1-sulfonate, 8-(2,3-dihydro-thieno[3,4-b][1,4]dioxin-2-yl)octane-1-sulfonic acid, sodium 8-(2,3-dihydro-thieno[3,4-b][1,4]dioxin-2-yl)octane-1-sulfonate, potassium 8-(2,3-dihydro-thieno[3,4-b][1,4]dioxin-2-yl)octane-1-sulfonate, sodium 3-[(2,3-dihydrothieno[3,4-b]-[1,4]dioxin-2-yl)methoxy]-1-propanesulfonate, potassium 3-[(2,3-dihydrothieno[3,4-b]-[1,4]dioxin-2-yl)methoxy]-1-propane sulfonate, sodium 3-[(2,3-dihydrothieno[3,4-b]-[1,4]dioxin-2-yl)methoxy]-1-methyl-1-propanesulfonate, sodium 3-[(2,3-dihydrothieno[3,4-b]-[1,4]dioxin-2-yl)methoxy]-1-ethyl-1-propanesulfonate, sodium 3-[(2,3-dihydrothieno[3,4-b]-[1,4]dioxin-2-yl)methoxy]-1-propyl-1-propane sulfonate, sodium 3-[(2,3-dihydrothieno[3,4-b]-[1,4]dioxin-2-yl)methoxy]-1-butyl-1-propanesulfonate, sodium 3-[(2,3-dihydrothieno[3,4-b]-[1,4]dioxin-2-yl)methoxy]-1-pentyl-1-propanesulfonate, sodium 3-[(2,3-dihydrothieno[3,4-b]-[1,4]dioxin-2-yl)methoxy]-1-hexyl-1-propane sulfonate, sodium 3-[(2,3-dihydrothieno[3,4-b]-[1,4]dioxin-2-yl)methoxy]-1-isopropyl-1-propanesulfonate, sodium 3-[(2,3-dihydrothieno[3,4-b]-[1,4]dioxin-2-yl)methoxy]-1-isobutyl-1-propanesulfonate, sodium 3-[(2,3-dihydrothieno[3,4-b]-[1,4]dioxin-2-yl)methoxy]-1-isopentyl-1-propane sulfonate, sodium 3-[(2,3-dihydrothieno[3,4-b]-[1,4]dioxin-2-yl)methoxy]-1-fluoro-1-propanesulfonate, potassium 3-[(2,3-dihydrothieno[3,4-b]-[1,4]dioxin-2-yl)methoxy]-1-methyl-1-propanesulfonate, 3-[(2,3-dihydrothieno[3,4-b]-[1,4]dioxin-2-yl)methoxy]-1-methyl-1-propane sulfonate, ammonium 3-[(2,3-dihydrothieno[3,4-b]-[1,4]dioxin-2-yl)methoxy]-1-methyl-1-propanesulfonate, triethylammonium 3-[(2,3-dihydrothieno[3,4-b]-[1,4]dioxin-2-yl)methoxy]-1-methyl-1-propanesulfonate, sodium 4-[(2,3-dihydrothieno[3,4-b]-[1,4]dioxin-2-yl)methoxy]-1-butanesulfonate, potassium 4-[(2,3-dihydrothieno[3,4-b]-[1,4]dioxin-2-yl)methoxy]-1-butanesulfonate, sodium 4-[(2,3-dihydrothieno[3,4-b]-[1,4]dioxin-2-yl)methoxy]-1-methyl-1-butanesulfonate, potassium 4-[(2,3-dihydrothieno[3,4-b]-[1,4]dioxin-2-yl)methoxy]-1-methyl-1-butanesulfonate, sodium 4-[(2,3-dihydrothieno[3,4-b]-[1,4]dioxin-2-yl)methoxy]-1-fluoro-1-butanesulfonate, potassium 4-[(2,3-dihydrothieno[3,4-b]-[1,4]dioxin-2-yl)methoxy]-1-fluoro-1-butanesulfonate, and the like.

An electric conductivity of each of the polythiophenes (A), (A1), (A2), and (A2') in the present embodiment is not particularly limited, and is preferably 10 S/cm or more as an electric conductivity in the form of film.

Note that, as the polythiophenes (A), (A1), (A2), and (A2') in the present embodiment, it is possible to use ones which are synthesized based on known information.

An amount of the polythiophenes (A), (A1), (A2), and (A2') each contained in the resin composition in accordance with an embodiment of the present invention is preferably 0.01% by weight to 10% by weight, more preferably 0.01% by weight to 5% by weight, and further preferably, from the viewpoint of excellent visible light transmittance of a hard coating, 0.1% by weight to 1% by weight, when 100% by weight represents a total amount of the resin composition.

As the ultraviolet curable resin (B), it is possible to use a generally known one. The ultraviolet curable resin (B) is not particularly limited, and a resin containing an oligomer (b1), a monomer (b2), a photopolymerization initiator (b3), and the like is generally used.

According to the invention, the oligomer (b1) represents an oligomer in which at least one polymerizable group exemplified by an acrylic group or a methacrylic group (hereinafter these two are correctively referred to as "(meth)acrylic group") is bound to a polymer constituted by a plurality of repeating units. Examples of the oligomer (b1) include an oligomer in which at least one polymerizable group exemplified by a (meth)acrylic group or the like is bound to any polymer selected from the group consisting of polyoxyethylene, polyurethane, polyester, polyacrylic acid, polymethacrylic acid, poly(oxyperfluoroalkylene), and the like.

Note that the number of polymerizable groups represented by a (meth)acrylic group or the like possessed by the oligomer (b1) is not limited and can be one, two, three, four, or five.

The oligomer (b1) is not particularly limited, and examples thereof include a urethane (meth)acrylate oligomer, an epoxy (meth)acrylate oligomer, a polyoxyethylene (meth)acrylate oligomer, a polyoxypropylene (meth)acrylate oligomer, a polyester (meth)acrylate oligomer, a poly(meth)acrylic acid (meth)acrylate oligomer, a poly(oxyperfluoroalkylene) (meth)acrylate oligomer, and the like. These oligomers (b1) can be used alone, or two or more of these can be used in combination. Among these, from the viewpoint of improving hardness of a hard coating, the oligomer (b1) is preferably at least one selected from the group consisting of a urethane acrylate oligomer and an epoxy acrylate oligomer. The oligomer (b1) preferably includes an acrylate oligomer having not more than 15 functionalities (i.e., the number of acryloyl groups in the oligomer is 15 or less), and more preferably includes an acrylate oligomer having not more than 10 functionalities.

Examples of the oligomer (b1) include products named UA-1100H (Shin-Nakamura Chemical Co., Ltd.), UN-904 (Negami Chemical Industrial Co., Ltd.), RUA-071 (ASIA INDUSTRY CO., LTD.), RUA-076MG (ASIA INDUSTRY CO., LTD.), EBECRYL 600 (DAICEL-ALLNEX LTD.), X-40-2669 (Shin-Etsu Chemical Co., Ltd.), and KR-470 (Shin-Etsu Chemical Co., Ltd.). These can be used alone, or two or more of these can be used in combination.

Examples of the monomer (b2) include monomolecular compounds and low molecular weight compounds each having at least one (which can be one, two, three, four, or five) polymerizable group exemplified as an acrylic group, a methacrylic group, or the like. Examples thereof include, but not particularly limited to, an acrylate monomer, a methacrylate monomer, and an acrylic silane monomer. Further specific examples thereof include 2-hydroxyethyl acrylate, 4-hydroxybutyl acrylate, isobornyl acrylate, pentaerythritoltetraacrylate, 4-acryloyl morpholine, γ-butyrolactone acrylate, γ-butyrolactone methacrylate, 5-oxotetrahydrofuran-3-ylmethacrylate, glycol dimethacrylate, trimethylolpropanetrimethacrylate, diethylene glycol diacrylate, diethylene glycol dimethacrylate, ethylene glycol monomethyl ether acrylate, ethylene glycol monoacrylate, ethylene glycol diacrylate, ethylene glycol monomethacrylate, ethylene glycol dimethacrylate, 1,3-propanedioldiacrylate, glycerol trimethacrylate, and 1,3-propanediol dimethacrylate. These monomers (b2) can be used alone, or two or more of these can be used in combination. Among these, the monomer (b2) is preferably at least one selected from the group consisting of an acrylate monomer and a methacrylate monomer. From the viewpoint of enhancing compatibility of a composition, 2-hydroxyethyl acrylate, 4-hydroxybutyl acrylate, pentaerythritoltetraacrylate, isobornyl acrylate, or 4-acryloyl morpholine is more preferable.

The photopolymerization initiator (b3) is not limited, as long as the photopolymerization initiator is one used in this field. Examples of the photopolymerization initiator (b3) include 1-hydroxycyclohexyl phenyl ketone, 2-methyl-1-[4-(methylthio)phenyl]-2-morpholinopropan-1-one, 2-benzyl-2-(dimethylamino)-1-[4-(morpholino)phenyl]-1-butanone, 2,2-dimethoxy-1,2-diphenylethan-1-one, 2,2-dimethoxy-2-phenylacetophenone, 2-hydroxy-2-methylpropiophenone, and the like.

The ultraviolet curable resin (B) preferably contains at least the oligomer (b1), more preferably contains the oligomer (b1) and the monomer (b2), and more preferably contains the oligomer (b1), the monomer (b2), and the photopolymerization initiator (b3).

An amount of the ultraviolet curable resin (B) contained in the resin composition in accordance with an embodiment of the present invention is not limited, and is preferably 10% by weight to 80% by weight, more preferably 10% by weight to 60% by weight, when 100% by weight represents the entire resin composition.

An amount of the oligomer (b1) contained in the resin composition in accordance with an embodiment of the present invention is not limited, and is preferably 5% by weight to 80% by weight, more preferably 5% by weight to 60% by weight, further preferably 5% by weight to 40% by weight, particularly preferably 5% by weight to 30% by weight, when 100% by weight represents the entire resin composition.

An amount of the monomer (b2) contained in the resin composition in accordance with an embodiment of the present invention is not limited, and is preferably 10% by weight to 80% by weight, more preferably 10% by weight to 60% by weight, further preferably 10% by weight to 40% by weight, when 100% by weight represents the entire resin composition.

An amount of the photopolymerization initiator (b3) contained in the resin composition in accordance with an embodiment of the present invention is not limited, and is preferably 0.1% by weight to 10% by weight, more preferably 0.2% by weight to 8% by weight, further preferably 0.5% by weight to 5% by weight, when 100% by weight represents the entire resin composition.

A contained amount of the photopolymerization initiator (b3) is preferably 0.1 parts by weight to 30 parts by weight, more preferably 1 part by weight to 20 parts by weight, further preferably 5 parts by weight to 20 parts by weight, when 100 parts by weight represents a total weight of the oligomer (b1) and the monomer (b2).

The solvent (C) is not particularly limited, and it is possible to use, without limitation, a solvent that can dissolve or disperse each of components contained together in the resin composition, and is known as a solvent of a composition for forming a coating layer in this technical field. According to the invention, the solvent (C) is selected from alcohol-based solvents (such as ethanol, isopropanol, trifluoroethanol), glycol ether-based solvents (such as 1-methoxy-2-propanol, ethylene glycol n-butyl ether), and ketone-based solvents (such as methyl ethyl ketone, methyl butyl ketone, methyl isobutyl ketone, diethyl ketone, dipropyl ketone, cyclohexanone). The solvents specifically exemplified here can be used alone, or two or more of these can be used in combination.

The solvent (C) is preferably a glycol ether-based solvent, and is more preferably 1-methoxy-2-propanol (PGME), from the viewpoint of excellent operability in coating film production.

An amount of the solvent (C) contained in the resin composition in accordance with an embodiment of the present invention is not limited, and is preferably 10% by weight to 80% by weight, more preferably 20% by weight to 70% by weight, further preferably 30% by weight to 60% by weight, when 100% by weight represents the entire resin composition.

The resin composition in accordance with an embodiment of the present invention may contain components other than those described above. The components other than those described above are not particularly limited, and examples thereof include a water-repellent antifouling agent (an additive that imparts water repellency and oil repellency), an ultraviolet ray absorbing agent, an antioxidant, a coloring agent, an inorganic filler, a defoaming agent, a thickener, a precipitation preventing agent, an antifogging agent, an antimicrobial agent, a dispersion agent, a surface-modifying agent, and the like.

Examples of the inorganic filler include single-walled carbon nanotubes, multi-walled carbon nanotubes, silver nanowires, carbon black, silica, alumina, boehmite, antimony oxide, chromium oxide, nickel oxide, copper oxide, tin oxide, titanium oxide, zirconium oxide, indium oxide, zinc oxide, and the like.

Examples of the water-repellent antifouling agent include, but not particularly limited to, a fluorine compound and a silicone compound. Specific examples of the fluorine compound include perfluoropolyether, and products named X-71-1203E (Shin-Etsu Chemical Co., Ltd.) and KY-1203 (Shin-Etsu Chemical Co., Ltd.). Specific examples of the silicone compound include products named KP-112 (Shin-Etsu Chemical Co., Ltd.), KP-341 (Shin-Etsu Chemical Co., Ltd.), and KP-423 (Shin-Etsu Chemical Co., Ltd.).

Examples of the dispersion agent include, but not particularly limited to, a dispersion agent having a polyester-based main chain, a polyacrylic main chain, a polyurethane-based main chain, a polyamine-based main chain, a polycaprolactone-based main chain, or the like, and has, as a side chain, a polar group such as an amino group, a carboxyl group, a sulfone group, or a hydroxyl group.

Examples of the polyester-based dispersion agent include DISPARON KS873N, DISPARON DA703-50, DISPARON DA7400 (Kusumoto Chemicals, Ltd.), and the like.

Examples of the polyacrylic dispersion agent include Disperbyk-2000, 2001, 2008, 2009, 2010, 2020, 2020N, 2022, 2025, 2050, 2070, 2095, 2150, 2151, 2155, 2163, 2164, BYKJET-9130, 9131, 9132, 9133, 9151 (BYK), EfkaPX4310, PX4320, PX4330, PA4401, 4402, PA4403, 4570, 7411, 7477, PX4700, PX4701 (BASF), TREPLUS D-1200, D-1410, D-1420, MD-1000 (Otsuka Chemical Co., Ltd.), FLOWLEN DOPA-15BHFS, 17HF, 22, G-700, 900, NC-500, GW-1500 (Kyoeisha Chemical Co., Ltd.), and the like.

Examples of the polyamine-based dispersion agent include DISPARON 1860 (Kusumoto Chemicals, Ltd.).

Examples of the polycaprolactone-based dispersion agent include AJISPER PB821, PB822, PB881 (Ajinomoto Fine-Techno Co., Inc.), HINOACT KF-1000, KF-1500, KF-1700, T-6000, T-7000, T-8000, T-8000E, T-9050 (Kawaken Fine Chemicals Co., Ltd.), Solsperse 20000, 24000, 32000, 32500, 32550, 32600, 33000, 33500, 34000, 35200, 36000, 37500, 39000, 71000, 76400, 76500, 86000, 88000, J180, J200 (The Lubrizol Corporation), TEGO Dispers 652, 655, 685, 688, 690 (EVONIK JAPAN CO., LTD.), and the like.

Examples of other commercially available dispersion agents include ESLEAM AD-3172M, 374M, 508E, 221P, 221J, DP-2, DJ-2, MALIALIM AKM-0531, AFB-1521, AAB-0851, SC-0505K, SC-1015F, SC-0708A (NOF CORPORATION), and the like.

An amount of the water-repellent antifouling agent contained in the resin composition in accordance with an embodiment of the present invention is not limited, and is preferably 0.1% by weight to 5% by weight, more preferably 0.1% by weight to 2% by weight, when 100% by weight represents the entire resin composition.

By curing the above described resin composition, a cured product, a hard coating (a hard coating membrane or a hard coating film), a laminate including the hard coating (a hard coating membrane or a hard coating film), or the like is produced. The cured product, the hard coating (a hard coating membrane or a hard coating film), the laminate including the hard coating (a hard coating membrane or a hard coating film), or the like is characterized by containing the polythiophene (A).

The cured product, the hard coating, and the laminate including the hard coating in accordance with an embodiment of the present invention are not particularly limited, and can be produced by, for example, applying the resin composition in accordance with an embodiment of the present invention to a base material, and subjecting the resin composition to ultraviolet irradiation. Note that the resin composition which has been applied is preferably dried before the ultraviolet irradiation, in order to enhance physical properties (such as hardness) of the cured product, the hard coating, or the laminate including the hard coating.

Examples of the base material described above include, but not particularly limited to, glass, a resin film, a resin plate, a resist substrate, and the like.

Examples of the resin film include, but not particularly limited to, a triacetyl cellulose (TAC) film, a polyethylene terephthalate (PET) film, a diacetylene cellulose film, an acetate butyrate cellulose film, a polyether sulfone film, a polyacrylic resin film, a polyurethane-based resin film, a polyester film, a polycarbonate film, a polysulfone film, a polyether film, a polymethylpentene film, a polyether ketone film, a (meth)acrylonitrile film, a cycloolefin polymer (COP) film, and the like.

Examples of the resin plate include an acrylic plate, a triacetyl cellulose plate, a polyethylene terephthalate plate, a diacetylene cellulose plate, an acetate butyrate cellulose plate, a polyether sulfone plate, a polyurethane plate, a polyester plate, a polycarbonate plate, a polysulfone plate, a polyether plate, a polymethylpentene plate, a polyether ketone plate, a (meth)acrylonitrile plate, and the like.

All of these base materials are excellent in transparency and are preferably applied to a display device described later. A thickness of the base material can be selected in a timely manner in accordance with the application, and is generally approximately 25 µm to 1,000 µm.

Examples of a method of applying the resin composition in accordance with an embodiment of the present invention include, but not particularly limited to, a screen printing method, a casting method, a dipping method, a bar coating method, a roller coating method, a gravure coating method, a flexographic printing method, a spray coating method, an air knife coating method, a curtain coating method, a spin coating method, a wire bar coating method, an extrusion coating method, an inkjet printing method, and the like.

A thickness of the hard coating film (hard coating layer) is not particularly limited, and is typically preferably 0.01 µm to 20 µm after application and drying.

A coating that has been applied to a base material and has been formed into a film may be dried before curing. At the time of drying, the coating may be heated as appropriate. A drying temperature is not particularly limited, provided that the temperature is a temperature at which a hard coating in a uniform dry state is obtained and is a temperature not higher than a heatproof temperature of the base material. The drying temperature falls within preferably a range of room temperature (15°C to 25°C) to 300°C, more preferably a range of room temperature to 250°C, further preferably a range of room temperature to 200°C.

A dry atmosphere can be either in air, in an inert gas, in vacuum, or under reduced pressure. From the viewpoint of inhibiting deterioration of a hard coating, an inert gas such as nitrogen or argon is preferably used.

After the drying, the coating is irradiated with an ultraviolet ray and cured. A radiation quantity of UV light is approximately 100 mJ/cm² to 21,000 mJ/cm², and preferably approximately 300 mJ/cm² to 2,100 mJ/cm². A radiation atmosphere can be either in air, in an inert gas, in vacuum, or under reduced pressure.

A film thickness (after drying and ultraviolet irradiation) of a hard coating containing the polythiophene (A) is not particularly limited, and is preferably in a range of 1 µm to 100 µm, more preferably in a range of 1 µm to 10 µm.

A hard coating produced from the resin composition in accordance with an embodiment of the present invention has high hardness. For example, for a hard coating formed to have a film thickness of 3 µm by the resin composition in accordance with an embodiment of the present invention, pencil hardness measured in accordance with JIS K-5600 is preferably H or more, and more preferably 2H or more.

The cured product, the hard coating, or the laminate including the hard coating may be applied to a display device while using a light source together. In this case, a base material that forms a hard coating film is preferably a base material having light transparency. As the base material having light transparency, it is possible to use the base material which has been described above as a base material for forming a hard coating film. The light source is preferably disposed on a back side of the base material, that is, on an opposite side of the base material from a hard coating layer formation surface, and preferably emits light from that position toward the base material.

The light source that can be combined with the cured product, the hard coating, or the laminate having the hard coating is not particularly limited, provided that the light source can emit light, and examples thereof include a light-emitting diode, a cold-cathode tube, a hot-cathode tube, an EL element, and the like. It is also possible to use a liquid crystal module, a backlight unit, or the like.

The liquid crystal module indicates one that has a configuration which includes the light source and in which a polarizing plate, a liquid crystal cell, and a polarizing plate are arranged in this order on the light source. The liquid crystal cell is not particularly limited, as long as the liquid crystal cell is generally used in a liquid crystal display device. Examples of the liquid crystal cell include a TN-type liquid crystal cell, an STN-type liquid crystal cell, an HAN-type liquid crystal cell, an IPS-type liquid crystal cell, a VA-type liquid crystal cell, an MVA-type liquid crystal cell, an OCB-type liquid crystal cell, and the like. Such a display device may further include a phase plate, a luminance-enhancing film, a light guide plate, a light diffusion plate, a light diffusion sheet, a light-concentrating sheet, a reflection plate, and the like.

Examples of the display device having the present laminate described above include flat panel displays such as a liquid crystal display device (liquid crystal display), a light-emitting diode (LED) display, an electroluminescent display (ELD), a vacuum fluorescent display (VFD), and a plasma display panel (PDP). The resin composition in accordance with an embodiment of the present invention used for producing a display device also has weather resistance in addition to antiblocking property, and thus allows outdoor use of these display devices. For example, a panel display can be placed outdoors or semi-outdoors for the purpose of indication of information such as an advertisement.

Examples of applications of the display device provided with the present laminate include a touch panel, which has a mechanism for operating a device by pressing a display on a screen, and is useful in, for example, a bank ATM, a vending machine, a mobile information terminal (PDA), a copy machine, a facsimile machine, a game machine, a guide display device installed in facilities such as a museum and a department store, a car navigation device, a multimedia station (a multifunctional terminal device installed in a convenience store), a mobile phone, a monitor device in a railway vehicle, or the like.

The present invention is not limited to the embodiments described above, but may be altered in various ways by a skilled person within the scope of the claims. Any embodiment based on a proper combination of technical means disclosed in different embodiments is also encompassed in the technical scope of the present invention.

Aspects of the present invention may include the following features <1> through <13>.
<1> A resin composition for an ultraviolet curing hard coating, the resin composition containing: an electrically conductive polymer that contains polythiophene (A) including at least two structural units each of which is at least one selected from the group consisting of a structural unit represented by a general formula (1) below and a structural unit represented by a general formula (2) below; an ultraviolet curable resin (B); and a solvent (C), 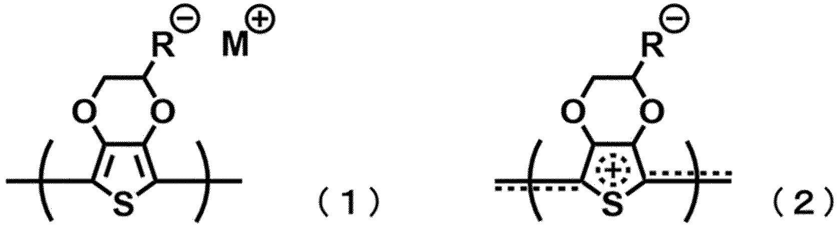 where, in the general formula (1), M⁺ represents a hydrogen ion, an alkali metal ion, a conjugate acid of an amine compound, or a quaternary ammonium cation, and in the general formulae (1) and (2), R represents an organic group that has 1 to 14 carbon atoms in total and has at least one substituent selected from the group consisting of a sulfonic acid group and a phosphonic acid group.
<2> The resin composition described in <1>, in which: the polythiophene (A) is polythiophene (A1) that includes at least two structural units each of which is at least one selected from the group consisting of a structural unit represented by a general formula (3) below and a structural unit represented by a general formula (4) below, 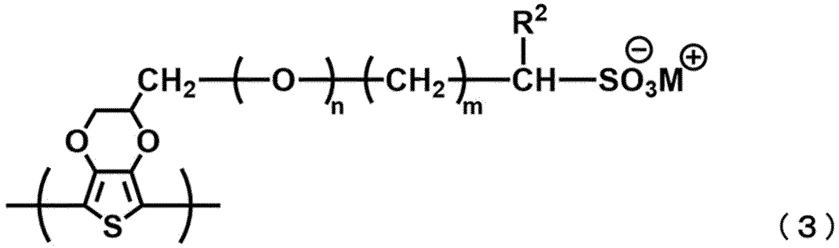 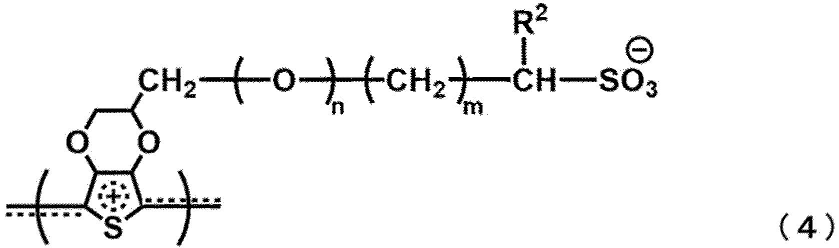 where, in the general formula (3), M⁺ represents a hydrogen ion, an alkali metal ion, a conjugate acid of an amine compound, or a quaternary ammonium cation, and in the general formulae (3) and (4), R² represents a hydrogen atom, a linear or branched alkyl group having 1 to 6 carbon atoms, or a halogen atom, m represents an integer of 1 to 6, and n represents 0 or 1.
<3> The resin composition described in <2>, in which m is 2 or 3.
<4> The resin composition described in <2> or <3>, in which R² is a methyl group.
<5> The resin composition described in any one of <1> through <4>, in which: M⁺ is a conjugate acid of an amine compound having 4 to 30 carbon atoms in total, or a quaternary ammonium cation having 4 to 30 carbon atoms in total.
<6> The resin composition described in any one of <1> through <5>, in which: the ultraviolet curable resin (B) contains at least an oligomer (b1), a monomer (b2), and a photopolymerization initiator (b3).
<7> The resin composition described in <6>, in which: the oligomer (b1) is at least one selected from the group consisting of a urethane acrylate oligomer and an epoxy acrylate oligomer.
<8> The resin composition described in <6> or <7>, in which: the monomer (b2) is at least one selected from the group consisting of an acrylate monomer and a methacrylate monomer.
<9> The resin composition described in any one of <1> through <8>, further containing a water-repellent antifouling agent.
<10> The resin composition described in <9>, in which: the water-repellent antifouling agent is at least one selected from the group consisting of a fluorine compound and a silicone compound.
<11> A method for producing a hard coating, the method including the steps of: applying the resin composition described in any one of <1> through <10> to a base material, then drying the resin composition, and then irradiating the resin composition with an ultraviolet ray.
<12> A cured product obtained by curing the resin composition described in any one of <1> through <10>.
<13> A hard coating, containing: polythiophene (A) including at least two structural units each of which is at least one selected from the group consisting of a structural unit represented by a general formula (1) below and a structural unit represented by a general formula (2) below, 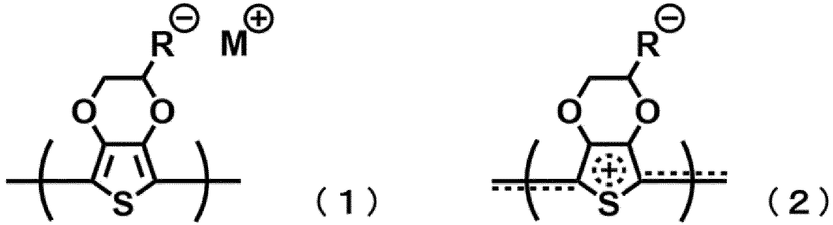 where, in the general formula (1), M⁺ represents a hydrogen ion, an alkali metal ion, a conjugate acid of an amine compound, or a quaternary ammonium cation, and in the general formulae (1) and (2), R represents an organic group that has 1 to 14 carbon atoms in total and has at least one substituent selected from the group consisting of a sulfonic acid group and a phosphonic acid group.

### Examples

The following description will discuss Examples. Note, however, that the present invention is not limited to these Examples. Pieces of analytical equipment and measurement methods used in Examples are listed as follows. The symbol "%" indicating a contained amount in Examples and Comparative Examples below is based on a weight unless otherwise stated.

### [Method for producing hard coating]

A hard coating was produced using a table-top printing test machine (K202 control coater, manufactured by Matsuo Sangyo Co., Ltd.) in the following manner. Using a wire bar with which a film thickness (wet film thickness) immediately after application was 18 µm, the resin composition in accordance with an embodiment of the present invention was applied to a PET film (A4160, manufactured by Toyobo Co., Ltd.), and then the resin composition was heated under an atmosphere for 5 minutes in a constant temperature bath set at 80°C. After that, the resin composition was irradiated with ultraviolet light for 1 minute under an atmosphere using a table-top UV curing device (HC-96X, manufactured by SEN LIGHTS Corporation), and thus a hard coating was obtained.

### [Method of measuring surface resistance value of hard coating and evaluation criterion]

A measurement probe (USP) of a surface resistance measuring instrument (Hiresta (registered trademark)-UX MCP-HT800, manufactured by Nittoseiko Analytech Co., Ltd.) was pressed on a surface of the produced hard coating, and a surface resistance value (Ω/sq) was measured under an atmosphere and at room temperature. For evaluation results, a case in which the surface resistance value was less than 1.0×10¹³ Ω/sq was evaluated to be good, and a case in which the surface resistance value was not less than 1.0×10¹³ Ω/sq was evaluated to be poor.

### [Method of measuring pencil hardness of hard coating and evaluation criterion]

With the use of an electric pencil hardness tester (BEVS1309, manufactured by BEVS Industrial), a tip of a pencil (manufactured by Mitsubishi Pencil Co., Ltd.) kept at an angle of 45° was placed on the produced hard coating so that a load of approximately 750 g was applied to the hard coating surface. A speed was set to 1.0 mm/s, and a measurement time was set to 30 seconds per reciprocation, and the tip of the pencil was caused to reciprocate 5 times on the hard coating. At the time when there were two or more scratches on the hard coating surface after the 5 times of reciprocation, the hardness was represented by pencil hardness that was one level below the pencil hardness at that time. For evaluation results, a case in which hardness was decreased by less than two levels as compared with pencil hardness of Comparative Example 1 (i.e., a hard coating containing no electrically conductive substance) was evaluated to be good, and a case in which the hardness was decreased by two levels or more was evaluated to be poor.

### [Method of measuring water contact angle of hard coating and evaluation criterion]

A water contact angle was measured using an automatic contact angle meter (DMo-602, manufactured by Kyowa Interface Science Co., Ltd.) on the produced hard coating. Measurement was carried out at normal temperature, and an amount of water was set to be 2 µL. For evaluation results, a case in which the water contact angle was 100° or more was evaluated to be good, and a case in which the water contact angle was less than 100° was evaluated to be poor.

### Example 1 [Preparation and evaluation of resin composition containing electrically conductive polymer]

0.1 g of a solid matter of polythiophene (corresponding to the foregoing polythiophene (A1), where R² was a methyl group, M⁺ was trioctylammonium, and m was 2; hereinafter abbreviated as "P1") produced based on a method of Example 2 in Japanese Patent Application Publication Tokukai No. 2019-210356 and 9.9 g of 1-methoxy-2-propanol (corresponding to the foregoing solvent (C); hereinafter abbreviated as "PGME") were stirred and mixed at 20°C for 30 minutes, and thus a PGME solution (P1 solution) in which a concentration of P1 was 1% by weight was obtained. With 0.4 g of the solution, an ultraviolet curable resin (B) (constituted by 2 g of a urethane acrylate oligomer (product name: UA-1100H, manufactured by Shin-Nakamura Chemical Co., Ltd., corresponding to the foregoing oligomer (bl)), 2 g of 2-hydroxyethyl acrylate (corresponding to the foregoing monomer (b2)), and 0.3 g of 1-hydroxycyclohexyl phenyl ketone (corresponding to the foregoing photopolymerization initiator (b3))) and 5.3 g of PGME (corresponding to the foregoing solvent (C)) were mixed, and a resultant mixture was stirred to be uniformly dissolved and dispersed, and thus a resin composition in accordance with an embodiment of the present invention containing an electrically conductive polymer was prepared. A composition of the resin composition is indicated in Table 1. From the composition thus prepared, a hard coating was produced in accordance with [Method for producing hard coating] described above, and the hard coating was evaluated. A result of the evaluation is indicated in Table 3.

### Examples 2 and 3 [Preparation and evaluation of resin composition containing electrically conductive polymer]

A resin composition was prepared and a hard coating was produced in manners similar to those in Example 1 in accordance with the composition indicated in Table 1, and the hard coating was evaluated. A result of the evaluation is indicated in Table 3.

### Example 4 [Preparation and evaluation of resin composition containing electrically conductive polymer]

With 1.6 g of the P1 solution which was identical with that described in Example 1 and had a P1 concentration of 1% by weight, an ultraviolet curable resin (B) (constituted by 2 g of a urethane acrylate oligomer (product name: UA-1100H, manufactured by Shin-Nakamura Chemical Co., Ltd., corresponding to the foregoing oligomer (b1)), 2 g of isobornyl acrylate (corresponding to the foregoing monomer (b2)), and 0.3 g of 1-hydroxycyclohexyl phenyl ketone (corresponding to the foregoing photopolymerization initiator (b3))) and 4.1 g of PGME (corresponding to the foregoing solvent (C)) were mixed, and a resultant mixture was stirred to be uniformly dissolved and dispersed, and thus a resin composition in accordance with an embodiment of the present invention containing an electrically conductive polymer was prepared. A composition of the resin composition is indicated in Table 1. From the composition thus prepared, a hard coating was produced in accordance with [Method for producing hard coating] described above, and the hard coating was evaluated. A result of the evaluation is indicated in Table 3.

### Example 5 [Preparation and evaluation of resin composition containing electrically conductive polymer]

With 1.6 g of the P1 solution which was identical with that described in Example 1 and had a P1 concentration of 1% by weight, an ultraviolet curable resin (B) (constituted by 2 g of a urethane acrylate oligomer (product name: UA-1100H, manufactured by Shin-Nakamura Chemical Co., Ltd., corresponding to the foregoing oligomer (b1)), 2 g of 4-acryloyl morpholine (corresponding to the foregoing monomer (b2)), and 0.3 g of 1-hydroxycyclohexyl phenyl ketone (corresponding to the foregoing photopolymerization initiator (b3))) and 4.1 g of PGME (corresponding to the foregoing solvent (C)) were mixed, and a resultant mixture was stirred to be uniformly dissolved and dispersed, and thus a resin composition in accordance with an embodiment of the present invention containing an electrically conductive polymer was prepared. A composition of the resin composition is indicated in Table 1. From the composition thus prepared, a hard coating was produced in accordance with [Method for producing hard coating] described above, and the hard coating was evaluated. A result of the evaluation is indicated in Table 3.

### Example 6 [Preparation and evaluation of resin composition containing electrically conductive polymer]

With 1.6 g of the P1 solution which was identical with that described in Example 1 and had a P1 concentration of 1% by weight, an ultraviolet curable resin (B) (constituted by 2 g of a urethane acrylate oligomer (product name: UN-904, manufactured by Negami Chemical Industrial Co., Ltd., corresponding to the foregoing oligomer (b1)), 2 g of 2-hydroxyethyl acrylate (corresponding to the foregoing monomer (b2)), and 0.3 g of 1-hydroxycyclohexyl phenyl ketone (corresponding to the foregoing photopolymerization initiator (b3))) and 4.1 g of PGME (corresponding to the foregoing solvent (C)) were mixed, and a resultant mixture was stirred to be uniformly dissolved and dispersed, and thus a resin composition in accordance with an embodiment of the present invention containing an electrically conductive polymer was prepared. A composition of the resin composition is indicated in Table 1. From the composition thus prepared, a hard coating was produced in accordance with [Method for producing hard coating] described above, and the hard coating was evaluated. A result of the evaluation is indicated in Table 3.

### Example 7 [Preparation and evaluation of resin composition containing electrically conductive polymer]

With 1.6 g of the P1 solution which was identical with that described in Example 1 and had a P1 concentration of 1% by weight, an ultraviolet curable resin (B) (constituted by 1 g of an epoxy acrylate oligomer (product name: EBECRYL 600, manufactured by DAICEL-ALLNEX LTD., corresponding to the foregoing oligomer (b1)), 3 g of 2-hydroxyethyl acrylate (corresponding to the foregoing monomer (b2)), and 0.3 g of 1-hydroxycyclohexyl phenyl ketone (corresponding to the foregoing photopolymerization initiator (b3))) and 4.1 g of PGME (corresponding to the foregoing solvent (C)) were mixed, and a resultant mixture was stirred to be uniformly dissolved and dispersed, and thus a resin composition in accordance with an embodiment of the present invention containing an electrically conductive polymer was prepared. A composition of the resin composition is indicated in Table 1. From the composition thus prepared, a hard coating was produced in accordance with [Method for producing hard coating] described above, and the hard coating was evaluated. A result of the evaluation is indicated in Table 3.

### Example 8 [Preparation and evaluation of resin composition containing electrically conductive polymer]

With 1.6 g of the P1 solution which was identical with that described in Example 1 and had a P1 concentration of 1% by weight, an ultraviolet curable resin (B) (constituted by 2 g of a urethane acrylate oligomer (product name: UA-1100H, manufactured by Shin-Nakamura Chemical Co., Ltd., corresponding to the foregoing oligomer (b1)), 2 g of 2-hydroxyethyl acrylate (corresponding to the foregoing monomer (b2)), and 0.3 g of 1-hydroxycyclohexyl phenyl ketone (corresponding to the foregoing photopolymerization initiator (b3))), 4.04 g of PGME (corresponding to the foregoing solvent (C)), and 0.06 g of a water-repellent antifouling agent (product name: KY-1203, manufactured by Shin-Etsu Chemical Co., Ltd.) constituted by a fluorine compound were mixed, and a resultant mixture was stirred to be uniformly dissolved and dispersed, and thus a resin composition in accordance with an embodiment of the present invention containing an electrically conductive polymer was prepared. A composition of the resin composition is indicated in Table 1. From the composition thus prepared, a hard coating was produced in accordance with [Method for producing hard coating] described above, and the hard coating was evaluated. A result of the evaluation is indicated in Table 4.

### Example 9 [Preparation and evaluation of resin composition containing electrically conductive polymer]

A resin composition was prepared and a hard coating was produced by carrying out operations similar to those in Example 1, except that 0.1 g of a solid matter of polythiophene (corresponding to the foregoing polythiophene (A1), where R² was a methyl group, M⁺ was tributylammonium, and m was 2, hereinafter abbreviated as P2) was used instead of using 0.1 g of the solid matter of P1 in Example 1. Then, the hard coating thus produced was evaluated. A composition of the resin composition is indicated in Table 1. A result of the evaluation is indicated in Table 3.

### Example 10 [Preparation and evaluation of resin composition containing electrically conductive polymer]

A resin composition was prepared and a hard coating was produced by carrying out operations similar to those in Example 1, except that 0.1 g of a solid matter of polythiophene (corresponding to the foregoing polythiophene (A1), where R² was a methyl group, M⁺ was diethylammonium, and m was 2, hereinafter abbreviated as P3) was used instead of using 0.1 g of the solid matter of P1 in Example 1. Then, the hard coating thus produced was evaluated. A composition of the resin composition is indicated in Table 1. A result of the evaluation is indicated in Table 3.

### Example 11 [Preparation and evaluation of resin composition containing electrically conductive polymer]

A resin composition was prepared and a hard coating was produced by carrying out operations similar to those in Example 1, except that 0.1 g of a solid matter of polythiophene (corresponding to the foregoing polythiophene (A1), where R² was a methyl group, M⁺ was tetrabutylammonium, and m was 2, hereinafter abbreviated as P4) was used instead of using 0.1 g of the solid matter of P1 in Example 1. Then, the hard coating thus produced was evaluated. A composition of the resin composition is indicated in Table 1. A result of the evaluation is indicated in Table 3.

### Example 12 [Preparation and evaluation of resin composition containing electrically conductive polymer]

A resin composition was prepared and a hard coating was produced by carrying out operations similar to those in Example 1, except that 0.1 g of a solid matter of polythiophene (corresponding to the foregoing polythiophene (A1), where R² was a hydrogen atom, M⁺ was trioctylammonium, and m was 2, hereinafter abbreviated as P5) was used instead of using 0.1 g of the solid matter of P1 in Example 1. Then, the hard coating thus produced was evaluated. A composition of the resin composition is indicated in Table 1. A result of the evaluation is indicated in Table 3.

### Example 13 [Preparation and evaluation of resin composition containing electrically conductive polymer]

A resin composition was prepared and a hard coating was produced by carrying out operations similar to those in Example 1, except that 0.1 g of a solid matter of polythiophene (corresponding to the foregoing polythiophene (A2'), where M⁺ was trioctylammonium, hereinafter abbreviated as P6) was used instead of using 0.1 g of the solid matter of P1 in Example 1. Then, the hard coating thus produced was evaluated. A composition of the resin composition is indicated in Table 1. A result of the evaluation is indicated in Table 3. The polythiophene P6 was produced based on Examples in Japanese Patent Application Publication Tokukai No. 2018-048322 and a method disclosed in Japanese Patent Application Publication Tokukai No. 2019-210356.

### Example 14 [Preparation and evaluation of resin composition containing electrically conductive polymer]

A resin composition was prepared and a hard coating was produced by carrying out operations similar to those in Example 1, except that 2 g of a urethane acrylate oligomer (product name: RUA-076MG, manufactured by ASIA INDUSTRY CO., LTD., corresponding to the foregoing oligomer (b1)) was used instead of using 2 g of the urethane acrylate oligomer (product name: UA-1100H, manufactured by Shin-Nakamura Chemical Co., Ltd., corresponding to the foregoing oligomer (b1)) in Example 1. Then, the hard coating thus produced was evaluated. A composition of the resin composition is indicated in Table 2. A result of the evaluation is indicated in Table 3.

### Example 15 [Preparation and evaluation of resin composition containing electrically conductive polymer]

A resin composition was prepared and a hard coating was produced by carrying out operations similar to those in Example 1, except that 2 g of a urethane acrylate oligomer (product name: RUA-071, manufactured by ASIA INDUSTRY CO., LTD., corresponding to the foregoing oligomer (b1)) was used instead of using 2 g of the urethane acrylate oligomer (product name: UA-1100H, manufactured by Shin-Nakamura Chemical Co., Ltd., corresponding to the foregoing oligomer (b1)) in Example 1. Then, the hard coating thus produced was evaluated. A composition of the resin composition is indicated in Table 2. A result of the evaluation is indicated in Table 3.

### Example 16 [Preparation and evaluation of resin composition containing electrically conductive polymer]

A resin composition was prepared and a hard coating was produced by carrying out operations similar to those in Example 1, except that 2 g of 4-hydroxybutyl acrylate (corresponding to the foregoing monomer (b2)) was used instead of using 2 g of 2-hydroxyethyl acrylate (corresponding to the foregoing monomer (b2)) in Example 1. Then, the hard coating thus produced was evaluated. A composition of the resin composition is indicated in Table 2. A result of the evaluation is indicated in Table 3.

### Example 17 [Preparation and evaluation of resin composition containing electrically conductive polymer]

A resin composition was prepared and a hard coating was produced by carrying out operations similar to those in Example 1, except that 2 g of pentaerythritoltetraacrylate (corresponding to the foregoing monomer (b2)) was used instead of using 2 g of 2-hydroxyethyl acrylate (corresponding to the foregoing monomer (b2)) in Example 1. Then, the hard coating thus produced was evaluated. A composition of the resin composition is indicated in Table 2. A result of the evaluation is indicated in Table 3.

### Example 18 [Preparation and evaluation of resin composition containing electrically conductive polymer]

0.1 g of a solid matter of P1 and 9.9 g of PGME were stirred and mixed at 20°C for 30 minutes, and thus a PGME solution (P1 solution) in which a concentration of P1 was 1% by weight was obtained. With 0.4 g of the solution, an ultraviolet curable resin (B) (constituted by 2 g of a urethane acrylate oligomer (product name: UA-1100H, manufactured by Shin-Nakamura Chemical Co., Ltd., corresponding to the foregoing oligomer (b1)), 2 g of 2-hydroxyethyl acrylate (corresponding to the foregoing monomer (b2)), and 0.3 g of 1-hydroxycyclohexyl phenyl ketone (corresponding to the foregoing photopolymerization initiator (b3))), 0.002 g of single-walled carbon nanotubes (single-walled carbon nanotubes in the form of dry powder, manufactured by Sigma Aldrich, carbon ≥ 80%, diameter = 1.2-2.0 nm), and 5.3 g of PGME (corresponding to the foregoing solvent (C)) were mixed, and a resultant mixture was stirred to be uniformly dissolved and dispersed, and thus a resin composition in accordance with an embodiment of the present invention containing an electrically conductive polymer was prepared. A composition of the resin composition is indicated in Table 2. From the composition thus prepared, a hard coating was produced in accordance with [Method for producing hard coating] described above, and the hard coating was evaluated. An obtained result of the evaluation is indicated in Table 3.

### Example 19 [Preparation and evaluation of resin composition containing electrically conductive polymer]

0.1 g of a solid matter of P1 and 9.9 g of PGME were stirred and mixed at 20°C for 30 minutes, and thus a PGME solution (P1 solution) in which a concentration of P1 was 1% by weight was obtained. With 0.4 g of the P1 solution, an ultraviolet curable resin (B) (constituted by 1 g of an epoxy acrylate oligomer (product name: EBECRYL 600, manufactured by DAICEL-ALLNEX LTD., corresponding to the foregoing oligomer (b1)), 3 g of 2-hydroxyethyl acrylate (corresponding to the foregoing monomer (b2)), and 0.3 g of 1-hydroxycyclohexyl phenyl ketone (corresponding to the foregoing photopolymerization initiator (b3))), 0.002 g of single-walled carbon nanotubes (single-walled carbon nanotubes in the form of dry powder, manufactured by Sigma Aldrich, carbon ≥ 80%, diameter = 1.2-2.0 nm), and 5.3 g of PGME (corresponding to the foregoing solvent (C)) were mixed, and a resultant mixture was stirred to be uniformly dissolved and dispersed, and thus a resin composition in accordance with an embodiment of the present invention containing an electrically conductive polymer was prepared. A composition of the resin composition is indicated in Table 2. From the composition thus prepared, a hard coating was produced in accordance with [Method for producing hard coating] described above, and the hard coating was evaluated. An obtained result of the evaluation is indicated in Table 3.

### Example 20 [Preparation and evaluation of resin composition containing electrically conductive polymer]

A resin composition was prepared and a hard coating was produced by carrying out operations similar to those in Example 1, except that a mixed solvent (corresponding to the foregoing solvent (C)) constituted by 5.25 g of PGME and 0.05 g of triethylene glycol monomethyl ether (hereinafter TEGME) was used instead of using 5.3 g of PGME (corresponding to the foregoing solvent (C)) in Example 1. Then, the hard coating thus produced was evaluated. A composition of the resin composition is indicated in Table 2. A result of the evaluation is indicated in Table 3.

### Example 21 [Preparation and evaluation of resin composition containing electrically conductive polymer]

A resin composition was prepared and a hard coating was produced by carrying out operations similar to those in Example 20, except that 0.05 g of diethylene glycol monobutyl ether (hereinafter DEGBE) was used instead of using 0.05 g of TEGME in Example 20. Then, the hard coating thus produced was evaluated. A composition of the resin composition is indicated in Table 2. A result of the evaluation is indicated in Table 3.

### Example 22 [Preparation and evaluation of resin composition containing electrically conductive polymer]

A resin composition was prepared and a hard coating was produced by carrying out operations similar to those in Example 20, except that 0.05 g of ethylene glycol (hereinafter EG) was used instead of using 0.05 g of TEGME in Example 20. Then, the hard coating thus produced was evaluated. A composition of the resin composition is indicated in Table 2. A result of the evaluation is indicated in Table 3.

### Example 23 [Preparation and evaluation of resin composition containing electrically conductive polymer]

A resin composition was prepared and a hard coating was produced by carrying out operations similar to those in Example 8, except that 0.06 g of a water-repellent antifouling agent (product name: KP-341, manufactured by Shin-Etsu Chemical Co., Ltd.) constituted by a silicone compound was used instead of using 0.06 g of a water-repellent antifouling agent (product name: KY-1203, manufactured by Shin-Etsu Chemical Co., Ltd.) constituted by a fluorine compound in Example 8. Then, the hard coating thus produced was evaluated. A composition of the resin composition is indicated in Table 2. A result of the evaluation is indicated in Table 3.

### Example 24 [Preparation and evaluation of resin composition containing electrically conductive polymer]

A resin composition was prepared and a hard coating was produced by carrying out operations similar to those in Example 8, except that 0.06 g of a water-repellent antifouling agent (product name: KP-112, manufactured by Shin-Etsu Chemical Co., Ltd.) constituted by a silicone compound was used instead of using 0.06 g of a water-repellent antifouling agent (product name: KY-1203, manufactured by Shin-Etsu Chemical Co., Ltd.) constituted by a fluorine compound in Example 8. Then, the hard coating thus produced was evaluated. A composition of the resin composition is indicated in Table 2. A result of the evaluation is indicated in Table 3.

### Comparative Example 1 [Preparation and evaluation of resin composition containing no electrically conductive polymer]

With an ultraviolet curable resin (B) (constituted by 2 g of a urethane acrylate oligomer (product name: UA-1100H, manufactured by Shin-Nakamura Chemical Co., Ltd., corresponding to the foregoing oligomer (b1)), 2 g of 2-hydroxyethyl acrylate (corresponding to the foregoing monomer (b2)), and 0.3 g of 1-hydroxycyclohexyl phenyl ketone (corresponding to the foregoing photopolymerization initiator (b3))), 5.7 g of PGME (corresponding to the foregoing solvent (C)) was mixed, and a resultant mixture was stirred to be uniformly dissolved and dispersed, and thus a resin composition which did not contain an electrically conductive polymer was prepared. A composition of the resin composition is indicated in Table 2. From the composition thus prepared, a hard coating was produced in accordance with [Method for producing hard coating] described above, and the hard coating was evaluated. An obtained result of the evaluation is indicated in Table 3.

### Comparative Example 2 [Preparation and evaluation of resin composition containing ionic liquid]

With 1.6 g of a PGME solution which was used as an ionic liquid and contained lithium bis(trifluoromethane sulfonyl)imide at a concentration of 1%, an ultraviolet curable resin (B) (constituted by 2 g of a urethane acrylate oligomer (product name: UA-1100H, manufactured by Shin-Nakamura Chemical Co., Ltd., corresponding to the foregoing oligomer (b1)), 2 g of 2-hydroxyethyl acrylate (corresponding to the foregoing monomer (b2)), and 0.3 g of 1-hydroxycyclohexyl phenyl ketone (corresponding to the foregoing photopolymerization initiator (b3))) and 4.1 g of PGME (corresponding to the foregoing solvent (C)) were mixed, and a resultant mixture was stirred to be uniformly dissolved and dispersed, and thus a resin composition containing the ionic liquid was prepared. A composition of the resin composition is indicated in Table 2. From the composition thus prepared, a hard coating was produced in accordance with [Method for producing hard coating] described above, and the hard coating was evaluated. An obtained result of the evaluation is indicated in Table 3.

### Comparative Example 3 [Preparation and evaluation of resin composition containing ionic liquid]

With 2.4 g of a PGME solution which was used as an ionic liquid for imparting an antistatic ability and contained lithium bis(trifluoromethane sulfonyl)imide at a concentration of 50%, an ultraviolet curable resin (B) (constituted by 2 g of a urethane acrylate oligomer (product name: UA-1100H, manufactured by Shin-Nakamura Chemical Co., Ltd., corresponding to the foregoing oligomer (b1)), 2 g of 2-hydroxyethyl acrylate (corresponding to the foregoing monomer (b2)), and 0.3 g of 1-hydroxycyclohexyl phenyl ketone (corresponding to the foregoing photopolymerization initiator (b3))) and 3.3 g of PGME (corresponding to the foregoing solvent (C)) were mixed, and a resultant mixture was stirred to be uniformly dissolved and dispersed, and thus a resin composition containing the ionic liquid was prepared. A composition of the resin composition is indicated in Table 2. From the composition thus prepared, a hard coating was produced in accordance with [Method for producing hard coating] described above, and the hard coating was evaluated. An obtained result of the evaluation is indicated in Table 3.

The water contact angle of Example 8 described above was measured. An obtained result is indicated in Table 4.

Surface resistance values of the hard coatings produced in Example 3 and Comparative Example 3 described above were measured under different humidity conditions. For the evaluation, a case in which a rate of change between a smallest surface resistance value and a largest surface resistance value under the humidity conditions was less than 10% was evaluated to be good, and a case in which the rate of change was 10% or more was evaluated to be poor. Note that a smaller rate of change means higher humidity durability. Obtained results of the evaluation are indicated in Table 5.

**[Table 1]**

| | Antistatic agent | | Ultraviolet curable resin (B) | | | | | | Solvent (C) | | Additive | |
|---|---|---|---|---|---|---|---|---|---|---|---|---|
| | | | Oligomer (b1) | | Monomer (b2) | | Photopolymerization initiator (b3) | | | | | |
| | Type | % by weight | Type | % by weight | Type | % by weight | Type | % by weight | Type | % by weight | Type | % by weight |
| Example 1 | Polythiophene (P1) | 0.04 | UA-1100H | 20 | 2-hydroxyethyl acrylate | 20 | 1-hydroxycyclohexyl phenyl ketone | 3 | PGME | 57 | - | - |
| Example 2 | Polythiophene (P1) | 0.08 | UA-1100H | 20 | 2-hydroxyethyl acrylate | 20 | 1-hydroxycyclohexyl phenyl ketone | 3 | PGME | 57 | - | - |
| Example 3 | Polythiophene (P1) | 0.16 | UA-1100H | 20 | 2-hydroxyethyl acrylate | 20 | 1-hydroxycyclohexyl phenyl ketone | 3 | PGME | 57 | - | - |
| Example 4 | Polythiophene (P1) | 0.16 | UA-1100H | 20 | Isobornyl acrylate | 20 | 1-hydroxycyclohexyl phenyl ketone | 3 | PGME | 57 | - | - |
| Example 5 | Polythiophene (P1) | 0.16 | UA-1100H | 20 | 4-acryloyl morpholine | 20 | 1-hydroxycyclohexyl phenyl ketone | 3 | PGME | 57 | - | - |
| Example 6 | Polythiophene (P1) | 0.16 | UN-904 | 20 | 2-hydroxyethyl acrylate | 20 | 1-hydroxycyclohexyl phenyl ketone | 3 | PGME | 57 | - | - |
| Example 7 | Polythiophene (P1) | 0.16 | EBECRYL 600 | 10 | 2-hydroxyethyl acrylate | 30 | 1-hydroxycyclohexyl phenyl ketone | 3 | PGME | 57 | - | - |
| Example 8 | Polythiophene (P1) | 0.16 | UA-1100H | 20 | 2-hydroxyethyl acrylate | 20 | 1-hydroxycyclohexyl phenyl ketone | 3 | PGME | 56.4 | KY-1203 | 0.6 |
| Example 9 | Polythiophene (P2) | 0.04 | UA-1100H | 20 | 2-hydroxyethyl acrylate | 20 | 1-hydroxycyclohexyl phenyl ketone | 3 | PGME | 57 | - | - |
| Example 10 | Polythiophene (P3) | 0.04 | UA-1100H | 20 | 2-hydroxyethyl acrylate | 20 | 1-hydroxycyclohexyl phenyl ketone | 3 | PGME | 57 | - | - |
| Example 11 | Polythiophene (P4) | 0.04 | UA-1100H | 20 | 2-hydroxyethyl acrylate | 20 | 1-hydroxycyclohexyl phenyl ketone | 3 | PGME | 57 | - | - |
| Example 12 | Polythiophene (P5) | 0.04 | UA-1100H | 20 | 2-hydroxyethyl acrylate | 20 | 1-hydroxycyclohexyl phenyl ketone | 3 | PGME | 57 | - | - |
| Example 13 | Polythiophene (P6) | 0.04 | UA-1100H | 20 | 2-hydroxyethyl acrylate | 20 | 1-hydroxycyclohexyl phenyl ketone | 3 | PGME | 57 | - | - |

**[Table 2]**

| | Antistatic agent | | Ultraviolet curable resin (B) | | | | | | Solvent (C) | | Additive | |
|---|---|---|---|---|---|---|---|---|---|---|---|---|
| | | | Oligomer (b1) | | Monomer (b2) | | Photopolymerization initiator (b3) | | | | | |
| | Type | % by weight | Type | % by weight | Type | % by weight | Type | % by weight | Type | % by weight | Type | % by weight |
| Example 14 | Polythiophene (P1) | 0.04 | RUA-076MG | 20 | 2-hydroxyethyl acrylate | 20 | 1-hydroxycyclohexyl phenyl ketone | 3 | PGME | 57 | - | - |
| Example 15 | Polythiophene (P1) | 0.04 | RUA-071 | 20 | 2-hydroxyethyl acrylate | 20 | 1-hydroxycyclohexyl phenyl ketone | 3 | PGME | 57 | - | - |
| Example 16 | Polythiophene (P1) | 0.04 | UA-1100H | 20 | 4-hydroxybutyl acrylate | 20 | 1-hydroxycyclohexyl phenyl ketone | 3 | PGME | 57 | - | - |
| Example 17 | Polythiophene (P1) | 0.04 | UA-1100H | 20 | Pentaerythritol tetraacrylate | 20 | 1-hydroxycyclohexyl phenyl ketone | 3 | PGME | 57 | - | - |
| Example 18 | Polythiophene (P1) | 0.04 | UA-1100H | 20 | 2-hydroxyethyl acrylate | 20 | 1-hydroxycyclohexyl phenyl ketone | 3 | PGME | 57 | Single-walled CNT | 0.02 |
| Example 19 | Polythiophene (P1) | 0.04 | EBECRYL 600 | 10 | 2-hydroxyethyl acrylate | 30 | 1-hydroxycyclohexyl phenyl ketone | 3 | PGME | 57 | Single-walled CNT | 0.02 |
| Example 20 | Polythiophene (P1) | 0.04 | UA-1100H | 20 | 2-hydroxyethyl acrylate | 20 | 1-hydroxycyclohexyl phenyl ketone | 3 | PGME | 56.5 | - | - |
| | | | | | | | | | TEGME | 0.5 | | |
| Example 21 | Polythiophene (P1) | 0.04 | UA-1100H | 20 | 2-hydroxyethyl acrylate | 20 | 1-hydroxycyclohexyl phenyl ketone | 3 | PGME | 56.5 | - | - |
| | | | | | | | | | DEGBE | 0.5 | | |
| Example 22 | Polythiophene (P1) | 0.04 | UA-1100H | 20 | 2-hydroxyethyl acrylate | 20 | 1-hydroxycyclohexyl phenyl ketone | 3 | PGME | 56.5 | - | - |
| | | | | | | | | | EG | 0.5 | | |
| Example 23 | Polythiophene (P1) | 0.16 | UA-1100H | 20 | 2-hydroxyethyl acrylate | 20 | 1-hydroxycyclohexyl phenyl ketone | 3 | PGME | 56.4 | KP-341 | 0.6 |
| Example 24 | Polythiophene (P1) | 0.16 | UA-1100H | 20 | 2-hydroxyethyl acrylate | 20 | 1-hydroxycyclohexyl phenyl ketone | 3 | PGME | 56.4 | KP-112 | 0.6 |
| Comparative Example 1 | - | - | UA-1100H | 20 | 2-hydroxyethyl acrylate | 20 | 1-hydroxycyclohexyl phenyl ketone | 3 | PGME | 57 | - | - |
| Comparative Example 2 | Ionic liquid | 0.16 | UA-1100H | 20 | 2-hydroxyethyl acrylate | 20 | 1-hydroxycyclohexyl phenyl ketone | 3 | PGME | 57 | - | - |
| Comparative Example 3 | Ionic liquid | 12 | UA-1100H | 20 | 2-hydroxyethyl acrylate | 20 | 1-hydroxycyclohexyl phenyl ketone | 3 | PGME | 45 | - | - |

**[Table 3]**

| | Surface resistance value [Ω/sq] | Evaluation | Pencil hardness | Evaluation |
|---|---|---|---|---|
| Example 1 | 8.4×10¹⁰ | Good | 5H | Good |
| Example 2 | 7.9×10⁹ | Good | 6H | Good |
| Example 3 | 8.8×10⁸ | Good | 6H | Good |
| Example 4 | 2.2×10 | Good | 6H | Good |
| Example 5 | 2.8×10⁹ | Good | 6H | Good |
| Example 6 | 1.1×10⁹ | Good | 6H | Good |
| Example 7 | 7.0×10¹² | Good | 6H | Good |
| Example 9 | 1.6×10¹⁰ | Good | 6H | Good |
| Example 10 | 5.4×10¹⁰ | Good | 6H | Good |
| Example 11 | 6.6×10¹⁰ | Good | 6H | Good |
| Example 12 | 7.2×10¹⁰ | Good | 6H | Good |
| Example 13 | 4.1×10¹⁰ | Good | 6H | Good |
| Example 14 | 3.5×10⁹ | Good | 6H | Good |
| Example 15 | 1.6×10¹¹ | Good | 6H | Good |
| Example 16 | 2.6×10¹⁰ | Good | 6H | Good |
| Example 17 | 8.1×10⁹ | Good | 6H | Good |
| Example 18 | 8.1×10⁹ | Good | 6H | Good |
| Example 19 | 3.7×10¹⁰ | Good | 6H | Good |
| Example 20 | 9.6×10⁹ | Good | 6H | Good |
| Example 21 | 2.8×10¹⁰ | Good | 6H | Good |
| Example 22 | 9.0×10⁹ | Good | 6H | Good |
| Example 23 | 1.8×10¹² | Good | 6H | Good |
| Example 24 | 1.1×10¹² | Good | 6H | Good |
| Comparative Example 1 | ≥1.0×10¹³ | Poor | 6H | Good |
| Comparative Example 2 | ≥1.0×10¹³ | Poor | 6H | Good |
| Comparative Example 3 | 4.5×10⁹ | Good | H | Poor |

**[Table 4]**

| | Water contact angle [°] | Evaluation | Surface resistance value [Ω/sq] | Evaluation | Pencil hardness | Evaluation |
|---|---|---|---|---|---|---|
| Example 8 | 107.7 | Good | 6.7×10¹² | Good | 6H | Good |

**[Table 5]**

| | Surface resistance value [Ω/sq] | | | Rate of change in surface resistance value [%] | Evaluation |
|---|---|---|---|---|---|
| | Humidity of 30% | Humidity of 50% | Humidity of 70% | | |
| Example 3 | 2.6×10⁹ | 5.0×10⁹ | 2.5×10⁹ | 3.8 | Good |
| Comparative Example 3 | ≥1.0×10¹³ | 8.2×10¹¹ | 4.5×10⁹ | ≥100 | Poor |

As indicated in Table 3, the surface resistance values of the hard coatings containing the polythiophene (A) in Examples 1 through 7 and 9 through 24 were 1.0×10⁸ Ω/sq to 7.0×10¹² Ω/sq, which were evaluated to be good. In contrast, the surface resistance value of the hard coating containing no polythiophene (A) in Comparative Example 1 was not less than 1.0×10¹³ Ω/sq, which was evaluated to be poor. As such, it has been found that the addition of the polythiophene (A) to resin compositions having various compositions for an ultraviolet curing hard coating imparted an antistatic ability.

As indicated in Table 3, the surface resistance value of the hard coating containing an ionic liquid in Comparative Example 2 was not less than 1.0×10¹³ Ω/sq, which was evaluated to be poor. Moreover, the surface resistance value of the hard coating containing an ionic liquid in Comparative Example 3 was 4.5×10⁹ Ω/sq, which was evaluated to be good, but the pencil hardness was H, which was evaluated to be poor. Here, when comparing Example 2 with Comparative Example 3, the surface resistance value of Example 2 was 7.9×10⁹ Ω/sq, which was substantially equivalent to that of Comparative Example 3. However, the pencil hardness of Example 2 was 6H, which was better than that of Comparative Example 3. As such, the hard coating containing the polythiophene (A) has been found to have both a better resistance value and better hardness, as compared with the hard coating containing an ionic liquid.

As indicated in Table 4, in Example 8, the water contact angle was 107.7°, which was evaluated to be good. Moreover, the surface resistance value was 6.7×10¹² Ω/sq, and the pencil hardness was 6H, which were evaluated to be good. As such, it has been found that the hard coating containing the polythiophene (A) has an antifouling property and water repellency, as well as an antistatic ability and hardness.

As indicated in Table 5, in Example 3, the rate of change in surface resistance value was 3.8 when the humidity was changed among 30% to 70%, which was evaluated to be good. In contrast, in Comparative Example 3, the rate of change in surface resistance value under the same condition was 100 or more, which was evaluated to be poor. As such, it has been found that the hard coating containing the polythiophene (A) has high moisture resistance.

### Industrial Applicability

The present embodiment provides a resin composition which is used for an ultraviolet curing hard coating, contains an electrically conductive polymer, and makes it possible to produce a hard coating having a plurality of improved functions such as an antistatic ability, hardness, transparency, and moisture resistance, by containing an electrically conductive polymer that is highly electrically conductive and is highly compatible with various resins for an ultraviolet curing hard coating.

A hard coating produced using the resin composition for an ultraviolet curing hard coating containing an electrically conductive polymer in the present embodiment has good hardness, a good antistatic ability, and good transparency. Therefore, the hard coating can be utilized, for example, as hard coating layers of various types of displays.

## Claims

1. A resin composition for an ultraviolet curing hard coating, said resin composition comprising:
an electrically conductive polymer that contains polythiophene (A) including at least two structural units each of which is at least one selected from the group consisting of a structural unit represented by a general formula (1) below and a structural unit represented by a general formula (2) below;
an ultraviolet curable acrylic or methacrylic resin (B); and
a solvent (C) selected from alcohol-based solvents, glycol ether-based solvents, ketone-based solvents, or a combination of two or more of these, 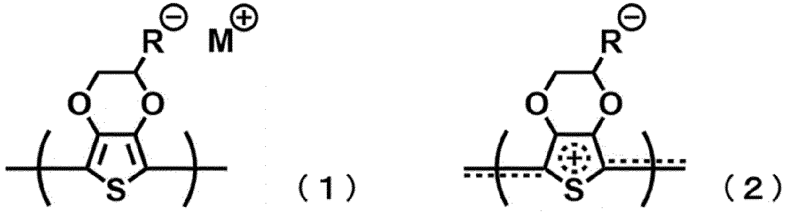
where, in the general formula (1), M⁺ represents a hydrogen ion, an alkali metal ion, a conjugate acid of an amine compound, or a quaternary ammonium cation, and in the general formulae (1) and (2), R represents an organic group that has 1 to 14 carbon atoms in total and has at least one substituent selected from the group consisting of a sulfonic acid group and a phosphonic acid group.

2. The resin composition as set forth in claim 1, wherein:
the polythiophene (A) is polythiophene (Al) that includes at least two structural units each of which is at least one selected from the group consisting of a structural unit represented by a general formula (3) below and a structural unit represented by a general formula (4) below, 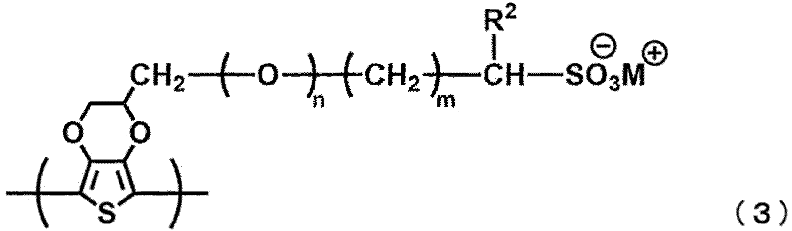 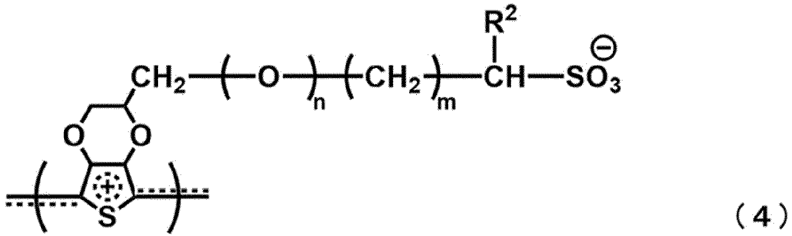
where, in the general formula (3), M⁺ represents a hydrogen ion, an alkali metal ion, a conjugate acid of an amine compound, or a quaternary ammonium cation, and in the general formulae (3) and (4), R² represents a hydrogen atom, a linear or branched alkyl group having 1 to 6 carbon atoms, or a halogen atom, m represents an integer of 1 to 6, and n represents 0 or 1.

3. The resin composition as set forth in claim 2, wherein m is 2 or 3.

4. The resin composition as set forth in claim 2 or 3, wherein R² is a methyl group.

5. The resin composition as set forth in any one of claims 1 through 4, wherein:
M⁺ is a conjugate acid of an amine compound having 4 to 30 carbon atoms in total, or a quaternary ammonium cation having 4 to 30 carbon atoms in total.

6. The resin composition as set forth in any one of claims 1 through 5, wherein:
the ultraviolet curable resin (B) contains at least an oligomer (b1), a monomer (b2), and a photopolymerization initiator (b3).

7. The resin composition as set forth in claim 6, wherein:
the oligomer (b1) is at least one selected from the group consisting of a urethane acrylate oligomer and an epoxy acrylate oligomer.

8. The resin composition as set forth in claim 6 or 7, wherein:
the monomer (b2) is at least one selected from the group consisting of an acrylate monomer and a methacrylate monomer.

9. The resin composition as set forth in any one of claims 1 through 8, further comprising a water-repellent antifouling agent.

10. The resin composition as set forth in claim 9, wherein:
the water-repellent antifouling agent is at least one selected from the group consisting of a fluorine compound and a silicone compound.

11. A method for producing a hard coating, said method comprising the steps of:
applying a resin composition recited in any one of claims 1 through 10 to a base material, then drying the resin composition, and then irradiating the resin composition with an ultraviolet ray.

12. A cured product which is obtained by curing a resin composition recited in any one of claims 1 through 10.

13. A hard coating comprising a cured product according to claim 12.

## Patentansprüche

1. Harzzusammensetzung für eine UV-härtbare Hartbeschichtung, wobei die Harzzusammensetzung umfasst:
ein elektrisch leitfähiges Polymer, das Polythiophen (A) enthält, das mindestens zwei Struktureinheiten umfasst, die jeweils mindestens eine sind, die ausgewählt ist aus der Gruppe, die besteht aus einer Struktureinheit, die von einer nachfolgenden allgemeinen Formel (1) dargestellt ist, und einer Struktureinheit, die von einer nachfolgenden allgemeinen Formel (2) dargestellt ist;
ein UV-härtbares Acryl- oder Methacrylatharz (B); und
ein Lösungsmittel (C), das von Lösungsmitteln auf Alkoholbasis, Lösungsmitteln auf Glycolether-Basis, Lösungsmitteln auf Keton-Basis oder einer Kombination aus zwei oder mehr davon ausgewählt ist, 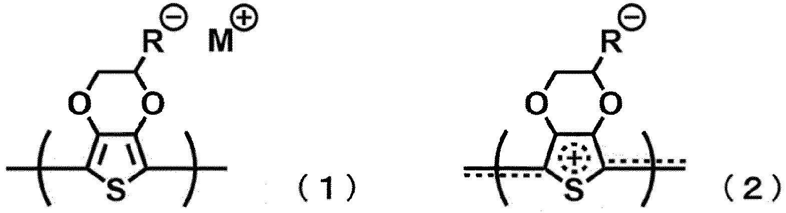
wobei in der allgemeinen Formel (1) M⁺ ein Wasserstoff-Ion, ein Alkalimetall-Ion, eine konjugierte Säure einer Amin-Verbindung oder ein quaternäres Ammonium-Kation darstellt und in den allgemeinen Formeln (1) und (2) R eine organische Gruppe darstellt, die insgesamt 1 bis 14 Kohlenstoffatome aufweist und mindestens einen Substituenten aufweist, der ausgewählt ist aus der Gruppe, die besteht aus einer Sulfonsäuregruppe und einer Phosphonsäuregruppe.

2. Harzzusammensetzung nach Anspruch 1, wobei:
das Polythiophen (A) ein Polythiophen (A1) ist, das mindestens zwei Struktureinheiten umfasst, die jeweils mindestens eine sind, die ausgewählt ist aus der Gruppe, die besteht aus einer Struktureinheit, die von einer nachfolgenden allgemeinen Formel (3) dargestellt ist, und einer Struktureinheit, die von einer nachfolgenden allgemeinen Formel (4) dargestellt ist, 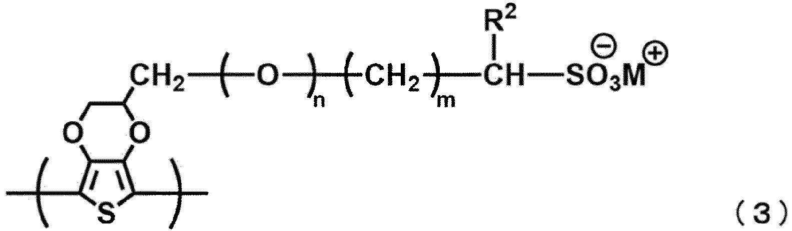 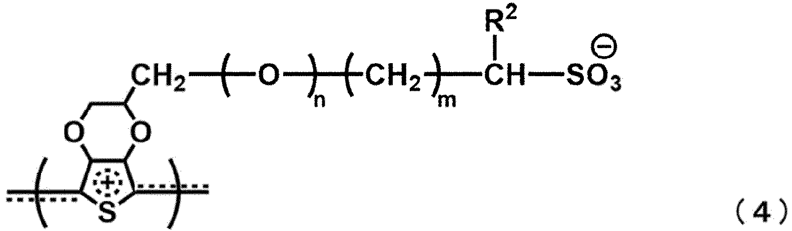
wobei in der allgemeinen Formel (3) M⁺ ein Wasserstoffion, ein Alkalimetall-Ion, eine konjugierte Säure einer Amin-Verbindung oder ein quaternäres Ammonium-Kation darstellt und in den allgemeinen Formeln (3) und (4) R² ein Wasserstoffatom, eine lineare oder verzweigte Alkylgruppe, die 1 bis 6 Kohlenstoffatome aufweist, oder ein Halogenatom darstellt, m eine ganze Zahl von 1 bis 6 darstellt und n 0 oder 1 darstellt.

3. Harzzusammensetzung nach Anspruch 2, wobei m 2 oder 3 ist.

4. Harzzusammensetzung nach Anspruch 2 oder 3, wobei R² eine Methylgruppe ist.

5. Harzzusammensetzung nach einem der Ansprüche 1 bis 4, wobei:
M⁺ eine konjugierte Säure einer Amin-Verbindung, die insgesamt 4 bis 30 Kohlenstoffatome aufweist, oder ein quaternäres Ammonium-Kation ist, das insgesamt 4 bis 30 Kohlenstoffatome aufweist.

6. Harzzusammensetzung nach einem der Ansprüche 1 bis 5, wobei
das UV-härtbare Harz (B) mindestens ein Oligomer (b1), ein Monomer (b2) und einen Photopolymerisationsinitiator (b3) enthält.

7. Harzzusammensetzung nach Anspruch 6, wobei:
das Oligomer (b1) mindestens eines ist, das ausgewählt ist aus der Gruppe, die besteht aus einem Urethanacrylat-Oligomer und einem Epoxyacrylat-Oligomer.

8. Harzzusammensetzung nach Anspruch 6 oder 7, wobei:
das Monomer (b2) mindestens eines ist, das ausgewählt ist aus der Gruppe, die besteht aus einem Acrylat-Monomer und einem Methacrylat-Monomer.

9. Harzzusammensetzung nach einem der Ansprüche 1 bis 8, ferner umfassend ein wasserabweisendes Antifouling-Mittel.

10. Harzzusammensetzung nach Anspruch 9, wobei:
das wasserabweisende Antifouling-Mittel mindestens eines ist, das ausgewählt ist aus der Gruppe, die besteht aus einer Fluorverbindung und einer Silikonverbindung.

11. Verfahren zur Herstellung einer Hartbeschichtung, wobei das Verfahren die folgenden Schritte umfasst:
Aufbringen einer Harzzusammensetzung nach einem der Ansprüche 1 bis 10 auf ein Basismaterial, dann Trocknen der Harzzusammensetzung und dann Bestrahlen der Harzzusammensetzung mit einem UV-Strahl.

12. Gehärtetes Produkt, das durch Härten einer Harzzusammensetzung nach einem der Ansprüche 1 bis 10 erhalten wird.

13. Hartbeschichtung, die ein gehärtetes Produkt nach Anspruch 12 umfasst.

## Revendications

1. Composition de résine pour un revêtement dur à durcissement aux ultraviolets, ladite composition de résine comprenant :
un polymère électroconducteur qui contient un polythiophène (A) comprenant au moins deux motifs structuraux, dont chacun est au moins un élément choisi dans le groupe consistant en un motif structural représenté par une formule générale (1) ci-dessous et un motif structural représenté par une formule générale (2) ci-dessous ;
une résine acrylique ou méthacrylique durcissable aux ultraviolets (B) ; et
un solvant (C) choisi parmi les solvants à base d'alcool, les solvants à base d'éther de glycol, les solvants à base de cétone, ou une combinaison de deux de ceux-ci ou plus, 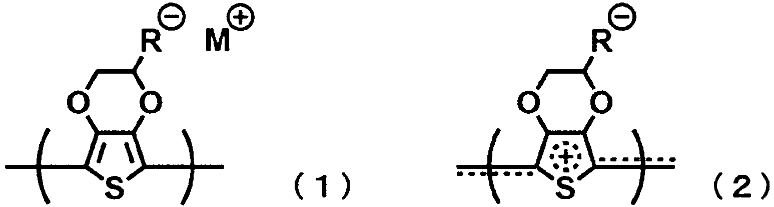
où, dans la formule générale (1), M⁺ représente un ion hydrogène, un ion de métal alcalin, un acide conjugué d'un composé amine, ou un cation d'ammonium quaternaire, et dans les formules générales (1) et (2), R représente un groupe organique qui a 1 à 14 atomes de carbone au total et a au moins un substituant choisi dans le groupe consistant en un groupe acide sulfonique et un groupe acide phosphonique.

2. Composition de résine selon la revendication 1, dans laquelle :
le polythiophène (A) est un polythiophène (A1) qui comprend au moins deux motifs structuraux dont chacun est au moins un élément choisi dans le groupe consistant en un motif structural représenté par une formule générale (3) ci-dessous et un motif structural représenté par une formule générale (4) ci-dessous, 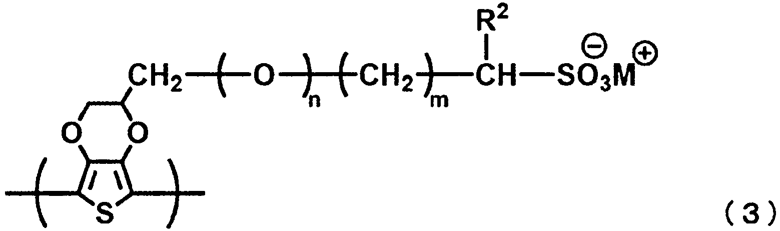 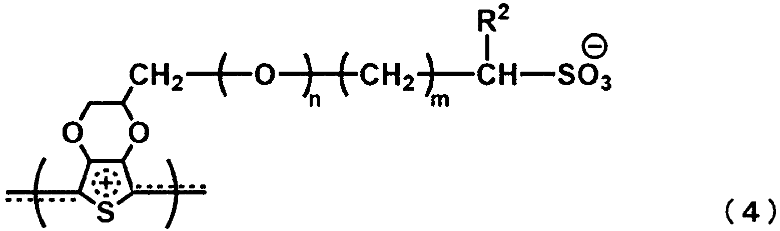
où, dans la formule générale (3), M⁺ représente un ion hydrogène, un ion de métal alcalin, un acide conjugué d'un composé amine, ou un cation d'ammonium quaternaire, et dans les formules générales (3) et (4), R² représente un atome d'hydrogène, un groupe alkyle linéaire ou ramifié qui a 1 à 6 atomes de carbone, ou un atome d'halogène, m représente un entier de 1 à 6, et n représente 0 ou 1.

3. Composition de résine selon la revendication 2, dans laquelle m vaut 2 ou 3.

4. Composition de résine selon la revendication 2 ou 3, dans laquelle R² est un groupe méthyle.

5. Composition de résine selon l'une quelconque des revendications 1 à 4, dans laquelle :
M⁺ est un acide conjugué d'un composé amine ayant 4 à 30 atomes de carbone au total, ou un cation d'ammonium quaternaire ayant 4 à 30 atomes de carbone au total.

6. Composition de résine selon l'une quelconque des revendications 1 à 5, dans laquelle :
la résine durcissable aux ultraviolets (B) contient au moins un oligomère (b1), un monomère (b2) et un initiateur de photopolymérisation (b3).

7. Composition de résine selon la revendication 6, dans laquelle :
l'oligomère (b1) est au moins un élément choisi dans le groupe consistant en un oligomère d'uréthane acrylate et un oligomère d'époxy acrylate.

8. Composition de résine selon la revendication 6 ou 7, dans laquelle :
le monomère (b2) est au moins un élément choisi dans le groupe consistant en un monomère d'acrylate et un monomère de méthacrylate.

9. Composition de résine selon l'une quelconque des revendications 1 à 8, comprenant en outre un agent antisalissure hydrofuge.

10. Composition de résine selon la revendication 9, dans laquelle :
l'agent antisalissure hydrofuge est au moins un élément choisi dans le groupe consistant en un composé fluor et un composé silicone.

11. Procédé de production d'un revêtement dur, ledit procédé comprenant les étapes de :
application d'une composition de résine définie dans l'une quelconque des revendications 1 à 10 à un matériau de base, puis séchage de la composition de résine, et puis irradiation de la composition de résine avec un rayonnement ultraviolet.

12. Produit durci qui est obtenu par durcissement d'une composition de résine définie dans l'une quelconque des revendications 1 à 10.

13. Revêtement dur comprenant un produit durci selon la revendication 12.
